(19) Europäisches Patentamt / European Patent Office / Office européen des brevets

(11) **EP 3 742 133 A1**

(12) **EUROPÄISCHE PATENTANMELDUNG**

(43) Veröffentlichungstag:
**25.11.2020 Patentblatt 2020/48**

(51) Int Cl.:
*G01F 23/68* (2006.01)    *G01F 23/64* (2006.01)

(21) Anmeldenummer: 20175359.7

(22) Anmeldetag: **19.05.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **22.05.2019 DE 102019113652**
**14.08.2019 DE 102019121943**
**20.11.2019 DE 102019131381**
**11.03.2020 DE 102020106712**

(71) Anmelder:
• **Saier, Beatrice**
**79117 Freiburg / Kappel (DE)**
• **Saier, Michael**
**79117 Freiburg / Kappel (DE)**

(72) Erfinder: **Saier, Michael**
**79117 Freiburg/Kappel (DE)**

(74) Vertreter: **Roche, von Westernhagen & Ehresmann**
**Patentanwaltskanzlei**
**Mäuerchen 16**
**42103 Wuppertal (DE)**

(54) **SYSTEM ZUR DOSIEREINRICHTUNG VON MEDIEN U.A**

(57) Die Erfindung betrifft unter anderem ein System (10) zur Dosierung von Medien (14), umfassend wenigstens ein Behältnis (13) zur Aufnahme eines Mediums, eine eine Pumpe (18) aufweisende Dosiereinrichtung (17), und ein Zielgefäß (23), wobei das Medium (14) unter Zuhilfenahme einer in das Behältnis (13) einsteckbaren und auf einem Boden des Behältnisses (58) aufsetzbaren Sauglanze (12) durch Betätigung der Pumpe (18) aus dem Behältnis entnehmbar und dem Zielgefäß (23) zuführbar ist. Die Besonderheit besteht unter anderem darin, gekennzeichnet, dass die Sauglanze einen Schwimmerkörper (37) aufweist, der entlang der axialen Erstreckung der Sauglanze zwischen einem Fußbereich der Sauglanze (63) und einem Kopfbereich der Sauglanze (62) verfahrbar angeordnet ist, und der in unterschiedlichen Axialpositionen unterschiedliche Schalter (53a, 53b, 53c, 53d) einer Messelektronik (51) betätigt.

Fig. 1

**Beschreibung**

Die Erfindung betrifft zunächst ein System zur Dosierung von Medien nach dem Oberbegriff des Anspruches 1. Derartige Systeme sind bekannt und weit verbreitet. Sie werden insbesondere von dem mit den Anmeldern verbundenen Unternehmen, der Herbert Saier GmbH, Gewerbestr. 71, 79194 Gundelfingen, Deutschland, seit Jahrzehnten entwickelt und gefertigt. Zum Stand der Technik wird beispielsweise auf die folgenden Patente und Patentanmeldungen der Anmelder verwiesen: DE 10 2011 108 396 A1, DE 10 2011 119 021 A1, DE 10 2011 122 921 A1, DE 50 2012 012 612 A1, 10 2012 012 694 A1, DE 10 2012 012 913 A1, DE 50 2013 010 339 A1, DE 10 2014 002 560 A1, DE 10 2014 010 126 A1, DE 50 2015 007 053 A1, DE 10 2015 110 862 A1, DE 10 2015 107 105 A1, DE 50 2016 003 374 A1, DE 10 2015 170 976 A1, DE 10 2016 102 829 A1, DE 10 2017 107 214 A1, DE 10 2017 114 767 A1, DE 10 2016 121 383 A1, DE 10 2017 103 168 A1, DE 10 2016 125 928 A1, DE 10 2017 114 665 A1, DE 10 2018 113 644 A1, DE 10 2018 117 669 A1, DE 10 2018 122 651 A1 und DE 10 2019 109 793 A1.

Auf den Inhalt der vorliegend aufgeführten Schutzrechtsanmeldungen wird zum Zwecke der Bezugnahme und zur Erläuterung einzelner Merkmale in dieser Anmeldung und zur Vermeidung von Wiederholungen Bezug genommen.

Das bekannte System verwendet Sauglanzen, die über eine Öffnung in der Deckenwand des Behältnisses in dieses eingesetzt werden können. Mit einem Sauglanzenfuß kann die Sauglanze auf den Boden des Behältnisses aufgesetzt werden.

In bestimmten Anwendungsfällen besteht der Bedarf, z B. an der Dosiereinrichtung und/oder dem Zielgefäß, z. B. an einer Waschmaschine, eine Information über den aktuellen Füllstand des Behältnisses zu ermitteln.

Hiervon ausgehend liegt der Erfindung die Aufgabe zugrunde, das bekannte System derartig weiterzuentwickeln, dass eine Information über den aktuellen Füllstand des Behältnisses auf einfache Weise ermittelbar ist.

Die Erfindung löst diese Aufgabe mit den Merkmalen des Anspruches 1, insbesondere mit denen des Kennzeichenteils und ist demgemäß dadurch gekennzeichnet, dass die Sauglanze einen Schwimmerkörper aufweist, der entlang der axialen Erstreckung der Sauglanze zwischen einem Fußbereich der Sauglanze und einem Kopfbereich der Sauglanze verfahrbar angeordnet ist, und der in unterschiedlichen Axialpositionen unterschiedliche Schalter einer Messelektronik betätigt.

Gemäß der Erfindung kann der Schwimmerkörper über die gesamte axiale Erstreckung der Sauglanze zwischen Kopfbereich und Fußbereich verfahrbar ausgebildet sein, oder über einen Großteil der axialen Erstreckung der Sauglanze verfahrbar ausgebildet sein. Hierdurch kann bei jeder beliebigen Füllhöhe des Mediums in dem Behältnis der Füllstand detektiert werden. Wesentlich ist, dass der Schwimmerkörper unterschiedliche Schalter betätigen, ansprechen oder auslösen kann, wobei die Schalter vorteilhafterweise ebenfalls entlang der axialen Erstreckung der Sauglanze angeordnet sind. Infolge des Ansprechens eines bestimmten Schalters oder mehrerer bestimmter Schalter kann auf die jeweils aktuelle Position des Schwimmerkörpers geschlossen werden, und dadurch eine Aussage auf das Flüssigkeitsniveau, also den Füllstand, getroffen werden. Damit ist eine Füllstandmessung über die gesamte Behälterhöhe möglich.

Im Stand der Technik waren nur Sauglanzen bekannt, die eine Leerstandmeldung generiert haben, also ein Signal ausgegeben haben, wenn das Behältnis vollständig entleert war. Bei dem erfindungsgemäßen System kann eine Füllhöhe des Behältnisses kontinuierlich gemessen werden.

Das erfindungsgemäße System dient zur Dosierung von Medien, insbesondere von Flüssigkeiten. Als Medium im Sinne der vorliegenden Patentanmeldung werden beispielsweise Waschmittel oder Reinigungsmittel oder deren Bestandteile angesehen. Das erfindungsgemäße System umfasst wenigstens ein Behältnis zur Aufnahme des Mediums. Von der Erfindung sind auch Ausführungsbeispiele umfasst, bei denen mehrere Behältnisse mit gleichen oder unterschiedlichen Medien vorgesehen sind.

Das System umfasst darüber hinaus eine Dosiereinrichtung. Dabei kann es sich beispielsweise um eine Schlauchpumpe oder eine andere geeignete Pumpe handeln, die insbesondere eine Steuerung umfasst. Die Dosiereinrichtung dient dazu, einem Zielgefäß, z. B. einer Waschmaschine oder einer Reinigungsanlage oder einer Geschirrspülmaschine das Medium - insbesondere zu einem vorher bestimmten Zeitpunkt und in einer vorbestimmten Menge - zuzuführen. Die Steuerung der Dosiereinrichtung kann die Pumpe für einen vorbestimmten Zeitraum oder beispielsweise auch für eine vorbestimmte Zahl von Umdrehungen ansprechen, um die gewünschte Menge, oder das gewünschte Volumen an Medium, aus dem Behältnis heraus zu entnehmen, und dem Zielgefäß zuzuführen.

Die Zuführung erfolgt unter Zuhilfenahme einer Sauglanze. Als Sauglanze wird ein im wesentlichen rohrförmiger Körper bezeichnet, der einen Sauglanzenkopf und einen Sauglanzenfuß sowie einen den Sauglanzenkopf und den Sauglanzenfuß miteinander verbindenden zylindrischen, oder im wesentlichen zylindrischen Abschnitt aufweist. Die Sauglanze wird durch eine Öffnung in einer Deckenwand des Behältnisses in das Behältnis eingesteckt. Das Behältnis - welches auch als Gebinde bezeichnet wird - kann z. B. ein Kanister oder ein Container sein. Der Fuß der Sauglanze kann auf den Boden des Behältnisses aufgesetzt werden. Von dieser Formulierung im Sinne dieser Patentanmeldung und von der Erfindung sind auch Sauglanzen bzw. Systeme mit solchen Sauglanzen umfasst, die im Bereich eines Gebindedeckels gehalten werden und mit ihrem Sauglanzen-Fußbereich an den Boden des Gebindes nahe herangebracht werden, so dass sie diesen berühren oder so, dass sie diesen nahezu berühren.

Der Kopf der Sauglanze kann sich im montierten Zustand innerhalb oder außerhalb des Behältnisses befinden. Im Bereich des Kopfes der Sauglanze ist ein Schlauchanschluss vorgesehen, um eine Verbindung der Förderleitung zu der Dosiereinrichtung bereitzustellen.

Die Sauglanze gemäß der Erfindung weist zumindest eine Saugleitung auf, durch die hindurch das Medium von dem Sauglanzenfuß zum Sauglanzenkopf und weiter zur Dosiereinrichtung und schließlich weiter zum Zielgefäß gefördert werden kann.

Von der Erfindung sind auch Systeme - sowie Sauglanzen - umfasst, bei denen die Sauglanze mehrere Saugleitungen, z. B. zwei oder drei oder mehr als drei Saugleitungen aufweist. Derartige Sauglanzen dienen gemäß der Erfindung dazu, einen Anschluss an mehrere Dosiereinrichtungen zu ermöglichen, so dass zeitgleich - oder zu unterschiedlichen Zeitpunkten - mehrere Dosiereinrichtungen Zugriff auf das selbe Behältnis haben und aus diesem das Medium zu unterschiedlichen Zielgefäßen hin fördern können.

Gemäß der Erfindung weist die Sauglanze einen Schwimmerkörper auf. Ein Schwimmerkörper im Sinne der Erfindung ist jegliches geeignete Element, welches auf der Flüssigkeitsoberfläche des Mediums aufschwimmt. Der Schwimmerkörper zeigt insoweit den Füllstand oder Flüssigkeitsniveau des Mediums in dem Behältnis an.

Der Schwimmerkörper ist gemäß der Erfindung entlang der axialen Erstreckung der Sauglanze zwischen einem Fußbereich der Sauglanze und einem Kopfbereich der Sauglanze verfahrbar angeordnet. Gemäß der Erfindung ist also der Schwimmerkörper über die gesamte oder im wesentlichen über die gesamte Länge oder über einen Großteil der Länge der Sauglanze verfahrbar.

Der Verfahrweg des Schwimmerkörpers ist dabei vorteilhaft so bemessen, dass - in Anpassung an das zu verwendende Behältnis - jedenfalls zwischen einem minimalen Füllstand (also entsprechend einem leeren Behältnis) und einer maximalen Füllhöhe oder einem höchsten Niveau alle Füllstände von dem Schwimmerkörper abgefahren oder erfasst werden können.

In bestimmten Anwendungen umfassen Behältnisse, wie z. B. ein 10-Liter-Gebinde oder ein 1.000-Liter-Container, in maximal befülltem Zustand regelmäßig einen gewissen Totraum, der nicht mit Medium sondern mit Luft befüllt ist. In diesen Anwendungen braucht der Schwimmerkörper im Sinne der Erfindung in dem Kopfbereich der Sauglanze nur soweit verfahrbar ausgebildet zu sein, dass er diesen oberen maximalen Füllstand noch messen kann.

Gemäß der Erfindung kann der Schwimmerkörper in unterschiedlichen Axialpositionen unterschiedliche Schalter einer Messelektronik betätigen.

Die unterschiedlichen Schalter können beispielsweise Reed-Schalter sein. Dies setzt voraus, dass der Schwimmerkörper einen Magneten umfasst.

Die unterschiedlichen Schalter können aber beispielsweise auch optische oder induktive oder kapazitive Schalter sein. Der Begriff Schalter im Sinne der vorliegenden Patentanmeldung kann jede geeignete Art von Detektor umfassen, der von dem Schwimmerkörper ansprechbar oder auslösbar ist. Zur Klarstellung sei an dieser Stelle angemerkt, dass eine Betätigung eines Schalters durch den Schwimmerkörper im Sinne der Erfindung ein Öffnen eines Schalters und/oder auch ein Schließen eines Schalters umfassen kann.

Beispielsweise kommen als Schalter im Sinne der Erfindung auch Hall-Effekt-Schalter in Betracht, also solche elektronischen Bauelemente, die Hall-Sensoren verwenden.

Gemäß einer vorteilhaften Ausgestaltung der Erfindung ist die Messelektronik in der Sauglanze angeordnet. Insbesondere kann vorgesehen sein, dass sich die Messelektronik entlang der axialen Länge der Sauglanze zwischen einem Fußbereich der Sauglanze und einem Kopfbereich der Sauglanze erstreckt.

Die Messelektronik kann z. B. auf einer Leiterplatte angeordnet sein, oder eine Leiterplatte umfassen, die etwa der Länge der Sauglanze entspricht, und sich ebenfalls vom Fußbereich der Sauglanze bis zu deren Kopfbereich erstreckt. Auf der Leiterplatte können beispielsweise elektronische Bauelemente, wie z. B. Widerstände und Schalteinrichtungen, die von dem Schwimmerkörper betätigt werden können, angeordnet sein.

Die Formulierung, wonach die Messelektronik an der Sauglanze angeordnet ist, schließt nicht aus, dass noch weitere Bestandteile einer Messschaltung, z. B. eine Einrichtung zur Widerstandsmessung oder eine Einrichtung zur Strommessung, außerhalb der Sauglanze angeordnet sein können. Beispielsweise kann gemäß der Erfindung vorgesehen sein, dass eine Schaltung zur Auswertung eines Schaltzustandes der Messelektronik am Kopf der Sauglanze angeordnet ist, oder an einer Steuerung der Dosiereinrichtung angeordnet ist, oder an einem Zielgerät oder an einer Steuerung des Zielgerätes angeordnet ist, und mit der Messelektronik an der Sauglanze verbunden ist.

Gemäß einer weiteren vorteilhaften Ausgestaltung der Erfindung ist die Messelektronik innerhalb einer Hohlkammer der Sauglanze angeordnet. Die Hohlkammer kann beispielsweise von einem Hohlprofil bereitgestellt sein.

Weiter vorteilhaft ist vorgesehen, dass die Hohlkammer versiegelt ist. Gemäß der Erfindung ist vorteilhaft vorgesehen, wenn die Hohlkammer bodenseitig abgedichtet ist, so dass ein Flüssigkeitseintritt verhindert wird.

Gemäß einer weiteren vorteilhaften Ausgestaltung der Erfindung erstreckt sich die Hohlkammer entlang der axialen Erstreckung der Sauglanze zwischen einem Fußbereich der Sauglanze und einem Kopfbereich der Sauglanze. Die Hohlkammer stellt insoweit einen lang gestreckten Unterbringungsraum für die Messelektronik bereit, der insbesondere eine kontinuierliche Füllstandmessung ermöglicht.

Gemäß einer weiteren vorteilhaften Ausgestaltung der Erfindung sind die Schalter entlang der axialen Erstreckung der Sauglanze zwischen einem Fußbereich der Sauglanze und einem Kopfbereich der Sauglanze angeordnet. Durch diese vorteilhafte Ausgestaltung der Erfindung wird ein System bereitgestellt, bei dem eine Füllstandmessung über die gesamte, oder nahezu die gesamte Höhe des Behältnisses ermöglicht wird.

Gemäß einer weiteren vorteilhaften Ausgestaltung der Erfindung ist vorgesehen, dass der Schwimmerkörper in jeder Axialposition wenigstens einen der Mehrzahl der Schalter anspricht. Insbesondere kann bei Annäherung des Schwimmerkörpers, wenn dieser einen Magneten aufweist, an einen als Reed-Schalter ausgebildeten Schalter, dieser geöffnet oder geschlossen werden. Die Schalterbetätigung kann zur Unterbrechung oder zur Schließung des Stromkreises führen. Eine solche Stromkreisunterbrechung oder Schließung ist auf einfache Weise detektierbar.

Gemäß einer vorteilhaften Ausgestaltung der Erfindung ist sichergestellt, dass jede Axialposition des Schwimmerschalters jedenfalls einen eindeutigen Funktionszustand der Messelektronik zur Folge hat:
Für den Fall, dass ein Schwimmerkörper in jeder Axialposition wenigstens einen Schalter anspricht, und die unterschiedlichen Schalterbetätigungen beispielsweise unterschiedliche Widerstände des Stromkreises zur Folge haben, kann zum Beispiel eine Messung des Widerstandes der Messelektronik einen Rückschluss auf eine exakte Position des Schwimmerkörpers zulassen.

Dem Fachmann ist deutlich, dass die Zahl der ansprechbaren Schalter den Grad der Auflösbarkeit der Füllstandmessung angibt.

Gleichermaßen kann auch bei einer Schaltung, die vorsieht, dass bei Annäherung des Schwimmerkörpers ein Schalter schließt, eine entsprechende eindeutige Schlussfolgerung getroffen werden. Aus der Messung eines Funktionszustandes der Messelektronik kann jedenfalls auf die Position des Schwimmerkörpers und damit auf den Füllstand geschlossen werden.

Gemäß einer weiteren vorteilhaften Ausgestaltung der Erfindung ist die Messelektronik mit einer Steuerung der Dosiereinrichtung oder mit einer Steuerung eines Zielgerätes verbindbar oder verbunden. Gemäß dieser Variante der Erfindung kann die Steuerung eine Auswertung eines Messergebnisses der Messelektronik vornehmen, oder einen von der Messelektronik bereitgestellten Messwert verarbeiten, insbesondere interpretieren.

Beispielsweise kann die Dosiereinrichtung bei Feststellung, dass der Medienvorrat in dem Behältnis zur Neige geht, eine Nachbestellung von Medium veranlassen, oder ein entsprechendes Bestellsignal ausgeben.

Gemäß einer weiteren vorteilhaften Ausgestaltung der Erfindung ist mittels der Steuerung feststellbar, welche Axialposition der Schwimmerkörper einnimmt, oder eine Information über eine Axialposition des Schwimmerkörpers ist von der Steuerung weiterverarbeitbar. So kann beispielsweise die Steuerung die Information erhalten, dass sich der Schwimmerkörper in einer bestimmten Höhe befindet, und hieraus schlussfolgern, welchen Füllstand das Behältnis aufweist. Die Dosiereinrichtung - oder gegebenenfalls auch das Zielgerät - kann so beispielsweise vorhersehen, wann etwa - basierend auf Durchschnittsverbräuchen der Vergangenheit - das Medium in dem Behältnis zur Neige geht oder voraussichtlich zur Neige geht. Hieraus kann beispielsweise in einem weiteren Schritt eine Nachbestellung an Medium veranlasst werden, oder die Dosiereinrichtung kann abschätzen, wie viele Dosierprozesse noch möglich sind, bevor das Medium in dem Behältnis zur Neige geht.

Gemäß einer weiteren vorteilhaften Ausgestaltung der Erfindung ist vorgesehen, dass mit unterschiedlichen Schalterstellungen in der Messelektronik unterschiedliche Widerstände der Messelektronik oder unterschiedliche Schaltzustände der Messelektronik einhergehen.

Die Schaltung kann beispielsweise derartig vorgesehen sein, dass eine Vielzahl von Widerständen, insbesondere von gleichen Widerständen, in Reihe geschaltet sind. Jeweils zwischen zwei Widerständen geht ein Schalter ab, der von dem Schwimmerkörper - bei dessen Annäherung an den Schalter - ansprechbar ist. Der Schalter kann beispielsweise als Reed-Schalter ausgebildet sein, und bei Annäherung des Schwimmerkörpers geschlossen werden.

Alternativ können die Schalter auch von Hall-Effekt-Schaltern bereitgestellt sein.

Die unterschiedlichen Schalter sind entlang der axialen Erstreckung der Sauglanze insbesondere äquidistant verteilt angeordnet. In unterschiedlichen Axialpositionen des Schwimmerkörpers werden unterschiedliche Schalter angesprochen. Durch die zuvor beschriebene Schaltung kann der Widerstand durch die Messelektronik hindurch in unterschiedlichen Positionen des Schwimmerkörpers unterschiedlich sein.

Dabei kann z. B. vorgesehen sein, dass der Widerstand der Messelektronik mit abnehmenden Abstand des Schwimmerkörpers zum Boden des Behältnisses zunimmt, so dass bei maximaler Annäherung des Schwimmerkörpers an den Boden des Behältnisses - also bei maximaler Annäherung des Schwimmerkörpers an den Fuß der Sauglanze - der Widerstand maximiert wird. Weiter kann beispielsweise ein Stromkreis durch die Messelektronik hindurch gänzlich unterbrochen werden, und somit der Widerstand maximiert werden. Dies kann im Sinne einer im Stand der Technik bekannten Fehlermeldung als Fehler, z. B. als Leerstandmeldung, detektiert und erkannt werden.

Mit unterschiedlichen Schalterstellungen in der Messelektronik können auch unterschiedliche Schaltzustände der Messelektronik einhergehen. Unterschiedliche Schaltzustände der Messelektronik können beispielsweise zur Folge haben, dass die Messelektronik unterschiedliche Spannungen oder unterschiedliche Ströme ausgibt oder abfragbar vorhält. So kann beispielsweise durch eine entsprechende Anordnung von Schaltern, Widerständen, und Sensoren, zum Beispiel Hall-Sensoren, erreicht werden, dass in Abhängigkeit von dem Niveaustand des Mediums in dem Behältnis und entsprechend damit einhergehend in Abhängigkeit von unterschiedlichen Axialpositionen des Schwimmerkörpers und eines an dem Schwimmer angeordneten Auslöseelementes, zum Beispiel eines Magneten, unterschiedliche Spannungen an der Messelektronik abgreifbar sind oder unterschiedliche Stromaufnahmen oder Leistungsaufnahmen durch die Messelektronik veranlasst werden.

Diese unterschiedlichen Schaltzustände der Messelektronik sind entweder unmittelbar von der Sauglanze detektierbar und/oder messbar und/oder auswertbar oder auch distanziert von der Sauglanze, insbesondere von der Dosiereinrichtung, gegebenenfalls aber auch an einem Zielgerät, detektierbar und/oder messbar und/oder auswertbar und erlauben einen Rückschluss auf den Niveaustand in dem Behältnis.

Besonders vorteilhaft ist vorgesehen, wenn die Sauglanze zur Verbindung ihrer Messelektronik mit der Dosiereinrichtung oder mit dem Zielgerät mit nur zwei Leitern auskommt. Dies ermöglicht zum Beispiel eine besonders vorteilhafte Ausbildung von Steckverbindern und damit eine preisgünstige Konstruktion und Fertigung.

Weiter ist gemäß einer vorteilhaften Ausgestaltung vorgesehen, wenn die Messelektronik der Sauglanze von der Dosiereinrichtung und/oder von dem Zielgerät oder von einer gesonderten Spannungsquelle mit einer Versorgungsspannung versorgt wird. Dies ermöglicht insbesondere auch die Anordnung eines elektronischen Verstärkerelementes an der Messelektronik der Sauglanze. Gemäß dieser Ausführungsform können besonders gute Messergebnisse gewährleistet werden.

Gemäß einer weiteren vorteilhaften Ausgestaltung der Erfindung umfasst die Sauglanze ein Außenrohr, welches den Schwimmerkörper vollständig umgibt. Das Außenrohr umhüllt den Schwimmerkörper und schützt diesen vor einem unmittelbaren Zugriff von außen. Damit wird einerseits die Gefahr reduziert, dass bei einem Einsetzen der Sauglanze in das Behältnis oder bei einer Herausnahme der Sauglanze aus dem Behältnis eine Beschädigung des Schwimmerkörpers eintritt. Andererseits wird hierdurch die Möglichkeit bereitgestellt, die Sauglanze mit durchgehenden vorsprungfreien Außenwandungsbereichen auszubilden, so dass ein Einsetzen der Sauglanze in das Behältnis und eine Herausnahme der Sauglanze aus dem Behältnis auf besonders einfache und leichte Weise möglich wird.

Gemäß einer weiteren vorteilhaften Ausgestaltung der Erfindung ist der Schwimmkörper im wesentlichen ringförmig ausgebildet. Dies ermöglicht die Bereitstellung eines groß dimensionierten Schwimmerkörpers, der mit seiner Innenumfangsfläche eine Profilanordnung umgibt, und entlang dieser geführt ist, und zugleich mit seiner Außenumfangsfläche an der Innenwandung eines Außenrohres geführt wird. Die Ringform ermöglicht insoweit eine stabile, verkippungsfreie Führung des Schwimmerkörpers.

Gemäß einer weiteren vorteilhaften Ausgestaltung der Erfindung umgibt der Schwimmerkörper eine Saugleitung für das Medium und/oder umgibt der Schwimmerkörper die Messelektronik. Hierdurch wird eine besonders einfache Konstruktion an der Sauglanze ermöglicht, die auch mit nur geringem Aufwand montiert werden kann.

Gemäß einer weiteren vorteilhaften Ausgestaltung der Erfindung kann der Schwimmerkörper einen Magneten aufweisen. Dies bietet eine besonders einfache Konstruktionsmöglichkeit eines Schwimmerkörpers und die Möglichkeit, die zuvor erwähnten Schalter z. B. als Reed-Schalter oder z. B. als Hall-Effekt-Schalter auszubilden. Hierdurch kann auf an sich bekannte Bauelemente zurückgegriffen werden.

Gemäß einer weiteren vorteilhaften Ausgestaltung der Erfindung sind die Schalter der Messelektronik oder sind zumindest einige der Schalter der Messelektronik als Reed-Schalter oder als Hall-Effekt-Schalter ausgebildet. Hierdurch kann eine besonders einfache Konstruktion erreicht werden, und unter Rückgriff auf herkömmliche Bauelemente auf besonders vorteilhafte Weise ein erfindungsgemäßes System bereitgestellt werden.

Gemäß einer weiteren vorteilhaften Ausgestaltung der Erfindung umfasst die Sauglanze ein Hohlprofil. Dies ermöglicht eine besonders einfache Konstruktion und Fertigung einer solchen Sauglanze.

Das Hohlprofil kann zwei oder mehrere Kammern umfassen. In einer ersten Kammer kann ein Ventilkörper, insbesondere eine Ventilkugel angeordnet sein, durch die die Saugleitung verschließbar ist.

Eine Kammer des Hohlprofils kann also die Saugleitung bereitstellen.

Eine andere der Kammern des Hohlprofils kann einen Unterbringungsraum für die Messelektronik bereitstellen.

Bezüglich der Funktionsweise des Ventilköpers sei folgendes angemerkt:

Bei Entnahme der Sauglanze aus dem Behältnis kann durch Bereitstellung des Ventilkörpers für eine Dichtigkeit gesorgt werden. So kann bei Entnahme der Sauglanze aus dem Behältnis verhindert werden, dass Medium aus dem Saugrohr der Sauglanze heraus tropft.

Die Sauglanze kann im Bereich ihres Fußes einen Sitz für einen Ventilkörper aufweisen. Hierdurch kann die zuvor beschriebene Dichtigkeit erzielt werden.

Gemäß einer weiteren vorteilhaften Ausgestaltung der Erfindung weist die Sauglanze einen oberen Anschlag für einen Ventilkörper auf. Für den Fall, dass die Pumpe angetrieben wird, und Medium aus dem Behältnis fördert, kann gemäß der Erfindung vorgesehen sein, dass der Medienstrom den Ventilkörper mitnimmt, und von seinem Ventilsitz abhebt. Das Medium kann insoweit den Ventilkörper umströmen.

Je nach Saugleistung kann von der Erfindung auch umfasst sein, dass ein oberer Anschlag für den Ventilkörper vorgesehen ist, beispielsweise im Bereich des Sauglanzenkopfes, um zu verhindern, dass der Ventilkörper aus der Sauglanze heraus tritt.

Gemäß einer weiteren vorteilhaften Ausgestaltung der Erfindung ist vorgesehen, dass die Sauglanze eine obere Anschlagfläche und eine untere Anschlagfläche für den Schwimmerkörper aufweist. Die obere und die untere Anschlagfläche für den Schwimmerkörper definieren den Verfahrweg des Schwimmerkörpers entlang der Sauglanze.

Eine vorteilhafte Ausführungsform des erfindungsgemäßen Systems ist dadurch gekennzeichnet, dass mittels der Steuerung oder mittels der Messelektronik unterschiedlichen Axialpositionen des Schwimmerkörpers unterschiedliche Niveaustände an Medium im Behältnis zuordenbar sind.

Eine weitere vorteilhafte Ausführungsform des erfindungsgemäßen Systems ist dadurch gekennzeichnet, dass mit unterschiedlichen Schalterstellungen in der Messelektronik unterschiedliche Widerstände der Messelektronik und/oder unterschiedliche Schaltzustände der Messelektronik und/oder unterschiedliche Leistungsaufnahmen der Messelektronik und/oder unterschiedliche Ströme durch die Messelektronik einhergehen.

Eine weitere vorteilhafte Ausführungsform des erfindungsgemäßen Systems ist dadurch gekennzeichnet, dass die Sauglanze ein Außenrohr umfasst, welches den Schwimmerkörper vollständig umgibt.

Eine weitere vorteilhafte Ausführungsform des erfindungsgemäßen Systems ist dadurch gekennzeichnet, dass der Schwimmerkörper im wesentlichen ringförmig ausgebildet ist.

Eine weitere vorteilhafte Ausführungsform des erfindungsgemäßen Systems ist dadurch gekennzeichnet, dass der Schwimmerkörper eine Saugleitung für das Medium und/oder die Messelektronik umgibt.

Eine weitere vorteilhafte Ausführungsform des erfindungsgemäßen Systems ist dadurch gekennzeichnet, dass der Schwimmerkörper einen Magneten aufweist.

Eine weitere vorteilhafte Ausführungsform des erfindungsgemäßen Systems ist dadurch gekennzeichnet, dass die Schalter der Messelektronik als Reed-Schalter und/oder als Hall-Effekt-Schalter ausgebildet sind.

Eine weitere vorteilhafte Ausführungsform des erfindungsgemäßen Systems ist dadurch gekennzeichnet, dass die Sauglanze ein Hohlprofil aufweist.

Eine weitere vorteilhafte Ausführungsform des erfindungsgemäßen Systems ist dadurch gekennzeichnet, dass das Hohlprofil zwei oder mehrere Kammern umfasst.

Eine weitere vorteilhafte Ausführungsform des erfindungsgemäßen Systems ist dadurch gekennzeichnet, dass die Sauglanze einen Ventilkörper, insbesondere eine Ventilkugel, umfasst, mit der die Saugleitung verschließbar ist.

Eine weitere vorteilhafte Ausführungsform des erfindungsgemäßen Systems ist dadurch gekennzeichnet, dass die Sauglanze in einem Bereich ihres Fußes einen Sitz für den Ventilkörper aufweist.

Eine weitere vorteilhafte Ausführungsform des erfindungsgemäßen Systems ist dadurch gekennzeichnet, dass die Sauglanze einen oberen Anschlag für den Ventilkörper aufweist.

Eine weitere vorteilhafte Ausführungsform des erfindungsgemäßen Systems ist dadurch gekennzeichnet, dass die Sauglanze eine obere Anschlagfläche und eine untere Anschlagfläche für den Schwimmerkörper aufweist.

Die Erfindung bezieht sich gemäß einem weiteren Aspekt auf eine Sauglanze nach dem Oberbegriff des Anspruches 11.

Sauglanzen der gattungsgemäßen Art sind bekannt und werden von dem mit den Anmeldern verbundenen Unternehmen der Herbert Saier GmbH, Gewerbestr. 71, 79194 Gundelfingen, Deutschland, seit Jahrzehnten entwickelt und vertrieben.

Sauglanzen der gattungsgemäßen Art sind z. B. in den beiden nachveröffentlichten deutschen Patentanmeldungen DE 10 2018 110 155 A1 und DE 102018106045 A1 beschrieben.

Ausgehend von einer Sauglanze der gattungsgemäßen Art, die druckschriftlich nicht belegbar ist, besteht die Aufgabe der Erfindung darin, eine Sauglanze bereitzustellen, die auf konstruktiv einfache Weise eine Möglichkeit bereitstellt, eine Füllstandhöhe eines Mediums in einem Behältnis kontinuierlich, insbesondere über die gesamte Befüllungshöhe des Behältnisses, zu ermitteln.

Die Erfindung löst diese Aufgabe mit den Merkmalen des Anspruches 11 und ist demgemäß dadurch gekennzeichnet, dass die Sauglanze einen Schwimmerkörper aufweist, der entlang der axialen Erstreckung der Sauglanze zwischen einem Fußbereich der Sauglanze und einem Kopfbereich der Sauglanze verfahrbar angeordnet ist, und der in unterschiedlichen Axialpositionen unterschiedliche Schalter einer Messelektronik betätigt.

Das Prinzip der Erfindung besteht im wesentlichen darin, der Sauglanze einen Schwimmerkörper zuzuordnen, der entlang eines axial langgestreckten Verfahrbereiches verlagerbar ist. Der Schwimmerkörper ist insbesondere zwischen einem Fußbereich der Sauglanze und einem Kopfbereich der Sauglanze verfahrbar. In unterschiedlichen Axialpositionen kann der Schwimmerkörper unterschiedliche Schalter der Messelektronik betätigen. Die Schalter können akustische, optische, induktive, kapazitive oder vorzugsweise Reed-Schalter oder beispielsweise Hall-Effekt-Schalter sein. Bei der Verwendung von Reed-Schaltern oder von Hall-Effekt-Schaltern kann dem Schwimmerkörper ein Magnet zugeordnet sein.

Zur Vermeidung von Wiederholungen wird bezüglich der Erläuterungen der Merkmale des Anspruches 11 sowie der Merkmale der nachfolgenden Ansprüche auf die zuvor anhand des erfindungsgemäßen Systems erläuterten Merkmale verwiesen, die analog für die Sauglanze Anwendung finden.

Gemäß einer vorteilhaften Ausführungsform der erfindungsgemäßen Sauglanze ist diese dadurch gekennzeichnet, dass die Messelektronik in der Sauglanze angeordnet ist.

Eine weitere Ausführungsform der erfindungsgemäßen Sauglanze ist dadurch gekennzeichnet, dass sich die Messelektronik entlang der axialen Erstreckung der Sauglanze zwischen dem Fußbereich der Sauglanze und dem Kopfbereich der Sauglanze erstreckt.

Eine weitere Ausführungsform der erfindungsgemäßen Sauglanze ist dadurch gekennzeichnet, dass die Messelektronik innerhalb einer Hohlkammer der Sauglanze angeordnet ist.

Eine weitere Ausführungsform der erfindungsgemäßen Sauglanze ist dadurch gekennzeichnet, dass die Hohlkammer versiegelt ist.

Eine weitere Ausführungsform der erfindungsgemäßen Sauglanze ist dadurch gekennzeichnet, dass sich die Hohlkammer entlang der axialen Erstreckung der Sauglanze zwischen einem Fußbereich der Sauglanze und einem Kopfbereich der Sauglanze erstreckt.

Eine weitere Ausführungsform der erfindungsgemäßen Sauglanze ist dadurch gekennzeichnet, dass die Schalter entlang der axialen Erstreckung der Sauglanze zwischen einem Fußbereich der Sauglanze und einem Kopfbereich der Sauglanze angeordnet sind.

Eine weitere Ausführungsform der erfindungsgemäßen Sauglanze ist dadurch gekennzeichnet, dass der Schwimmerkörper in jeder Axialposition wenigstens einen der Mehrzahl der Schalter anspricht.

Eine weitere Ausführungsform der erfindungsgemäßen Sauglanze ist dadurch gekennzeichnet, dass mit unterschiedlichen Schalterstellungen der Messelektronik unterschiedliche Widerstände der Messelektronik und/oder unterschiedliche Schaltzustände der Messelektronik und/oder unterschiedliche Leistungsaufnahmen der Messelektronik und/oder unterschiedliche Ströme durch die Messelektronik hindurch einhergehen.

Eine weitere Ausführungsform der erfindungsgemäßen Sauglanze ist dadurch gekennzeichnet, dass die Sauglanze ein Außenrohr umfasst, welches den Schwimmerkörper vollständig umgibt.

Eine weitere Ausführungsform der erfindungsgemäßen Sauglanze ist dadurch gekennzeichnet, dass der Schwimmerkörper im wesentlichen ringförmig ausgebildet ist.

Eine weitere Ausführungsform der erfindungsgemäßen Sauglanze ist dadurch gekennzeichnet, dass der Schwimmerkörper eine Saugleitung für das Medium und/oder die Messelektronik umgibt.

Eine weitere Ausführungsform der erfindungsgemäßen Sauglanze ist dadurch gekennzeichnet, dass der Schwimmerkörper einen Magneten aufweist.

Eine weitere Ausführungsform der erfindungsgemäßen Sauglanze ist dadurch gekennzeichnet, dass die Schalter der Messelektronik als Reed-Schalter und/oder als Hall-Effekt-Schalter ausgebildet sind.

Eine weitere Ausführungsform der erfindungsgemäßen Sauglanze ist dadurch gekennzeichnet, dass die Sauglanze ein Hohlprofil aufweist.

Eine weitere Ausführungsform der erfindungsgemäßen Sauglanze ist dadurch gekennzeichnet, dass das Hohlprofil zwei oder mehrere Kammern umfasst.

Eine weitere Ausführungsform der erfindungsgemäßen Sauglanze ist dadurch gekennzeichnet, dass die Sauglanze einen Ventilkörper, insbesondere eine Ventilkugel, umfasst, mit der die Saugleitung verschliessbar ist.

Eine weitere Ausführungsform der erfindungsgemäßen Sauglanze ist dadurch gekennzeichnet, dass die Sauglanze in einem Bereich ihres Fußes einen Sitz für den Ventilkörper aufweist.

Eine weitere Ausführungsform der erfindungsgemäßen Sauglanze ist dadurch gekennzeichnet, dass die Sauglanze einen oberen Anschlag für den Ventilkörper aufweist.

Eine weitere Ausführungsform der erfindungsgemäßen Sauglanze ist dadurch gekennzeichnet, dass die Sauglanze eine obere Anschlagfläche für den Schwimmerkörper aufweist.

Gemäß einem weiteren Aspekt bezieht sich die Erfindung auf eine Sauglanze nach Anspruch 12.

Der Erfindung liegt die Aufgabe zugrunde, eine Sauglanze der gattungsgemäßen Art derart weiterzuentwickeln, dass sie eine erhöhte Sicherheit bietet.

Die Erfindung löst diese Aufgabe mit den Merkmalen des Anspruches 12.

Das Prinzip der Erfindung besteht darin, dass die Sauglanze eine Saugleitung aufweist, durch die hindurch das Medium aus dem Behältnis entnommen werden kann. Die Saugleitung kann beispielsweise eine Kammer eines Hohlprofils sein. Die Besonderheit besteht in der Anordnung eines von einer Ventilkugel bereitgestellten Ventilkörpers in der Saugleitung. Die Ventilkugel kooperiert vorzugsweise mit einem Ventilsitz am fußseitigen Ende der Saugleitung.

Wird die Sauglanze angehoben, sinkt die Ventilkugel aufgrund der Schwerkraft nach unten und gelangt in den Ventilsitz. In dem Ventilsitz befindlich schließt und dichtet die Ventilkugel die Saugleitung nach unten ab.

Für den Fall, dass die Sauglanze aus dem Behältnis entnommen wird, während sich in dem Behältnis noch Medium befindet - und sich möglicherweise auch in der Saugleitung noch Medium befindet -, kann infolge des Anhebens der Sauglanze das in der Saugleitung befindliche Medium die Ventilkugel nach unten, gegen den Ventilsitz, drücken. Wird die Sauglanze aus dem Behältnis herausgenommen, dichtet die Ventilkugel in Zusammenwirkung mit dem Ventilsitz die Saugleitung nach unten hin ab. Auf diese Weise wird verhindert, dass eine unter Umständen hoch gefährliche, beispielsweise ätzende, oder unbedingt vor Hautkontakt zu schützende Chemikalien, mit einer Bedienperson - unabsichtlich - in Kontakt gerät.

Die Erfindung betrifft gemäß einem weiteren Aspekt eine Sauglanze nach dem Anspruch 13.

Wiederum liegt der Erfindung die Aufgabe zugrunde, eine Sauglanze der bekannt gewordenen Art derartig weiter zu bilden, dass sie eine verbesserte Handhabung gewährleistet.

Die Erfindung löst diese Aufgabe mit den Merkmalen des Anspruches 13, insbesondere mit denen des Kennzeichenteils, und ist demgemäß dadurch gekennzeichnet, dass die Sauglanze einen Schwimmerkörper aufweist, der zwischen zumindest zwei unterschiedlichen, von einer Messelektronik detektierbaren Positionen verfahrbar ist, und dass die Sauglanze einen insbesondere von einem Außenrohr bereitgestellten Wandungsbereich umfasst, der den Schwimmerkörper in den beiden Positionen außenseitig überdeckt.

Das Prinzip der Erfindung besteht darin, dass die Sauglanze einen Schwimmerkörper aufweist, der zwischen zwei unterschiedlichen Positionen verfahrbar ist. Die beiden unterschiedlichen Positionen können von einer Messelektronik detektierbar sein. Dazu reicht es aus, wenn das Erreichen einer Position des Schwimmerkörpers von der Messelektronik detektierbar ist. Der Schwimmerkörper kann zwischen dem Fußbereich und dem Kopfbereich oder nur zwischen einer Teilstrecke zwischen Fußbereich und Kopfbereich der Sauglanze verfahrbar ausgebildet sein.

Gemäß der Erfindung nach Anspruch 13 ist ein Wandungsbereich an der Sauglanze vorgesehen, der insbesondere von einem Außenrohr bereitgestellt sein kann. Der Wandungsbereich überdeckt den Schwimmerkörper in den beiden Positionen außenseitig.

Dies bedeutet, dass unabhängig davon, in welcher Position sich der Schwimmerkörper befindet, dieser außenseitig von der Wandung übergriffen wird. Insbesondere wird der Schwimmerkörper allseitig außenwandig übergriffen. Der Schwimmerkörper ist also versteckt angeordnet, und nicht exponiert. Damit wird verhindert, dass vorspringende oder rückspringende Bereiche oder Fugen oder dergleichen im Bereich des Schwimmerkörpers von der Außenseite her zugänglich sind. Damit kann z. B. eine durchgehende glatte Außenumfangsfläche der Sauglanze erreicht werden, insbesondere auch in dem Anordnungsbereich des Schwimmerkörpers. Auch ist der Schwimmerkörper innerhalb des Wandungsbereiches geschützt untergebracht, so dass Verletzungen oder Beschädigungen des Schwimmerkörpers sicher verhindert werden können.

Gemäß einem weiteren Aspekt der Erfindung wird eine Sauglanze nach Anspruch 14 vorgeschlagen.

Diese löst die zuvor beschriebene Aufgabe ebenfalls.

Das Prinzip dieser Erfindung besteht darin, dass an mindestens zwei unterschiedlichen Axialpositionen der Sauglanze zwischen Fußbereich und Kopfbereich zwei von dem Schwimmerkörper betätigbare Schalter vorgesehen sind. Die Verfahrbewegung des Schwimmerkörpers hin zum Kopfbereich der Sauglanze kann durch eine Anschlagfläche oder ein Anschlagelement begrenzt sein.

Bezogen auf die gesamte axiale Erstreckung der Sauglanze zwischen Fußbereich und Kopfbereich kann die Anschlagfläche beispielsweise an einer Position entsprechend etwa 75 % der maximalen Füllhöhe angeordnet sein.

Besonders vorteilhaft ist vorgesehen, wenn ein von dem Schwimmerkörper ansprechbarer erster Schalter oder oberer Schalter im Bereich der Anschlagfläche positioniert ist.

Befindet sich der Schwimmerkörper in einem an der Anschlagfläche anliegenden Zustand, so kann die Messelektronik auf diese Weise erkennen, dass eine bestimmte Füllhöhe (zum Beispiel 75 % der Füllhöhe) erreicht ist oder dass das Medium in dem Gebinde diese Füllhöhe überschreitet.

Der erste Schalter wird also von dem Schwimmkörper betätigt, wenn das Medium einen Füllstand im Gebinde zwischen 75 % und 100 % aufweist.

Sinkt der Flüssigkeitsstand des Mediums in dem Gebinde auf einen Wert unterhalb dieser bestimmten Füllhöhe, wird der erste Schalter aus seinem betätigten Zustand in seinen nicht betätigten Zustand überführt, zum Beispiel geöffnet. Die Messelektronik kann dann feststellen, dass das Flüssigkeitsniveau auf einen Wert unterhalb dieses Pegels gesunken ist.

Ein weiterer oder ein zweiter Schalter, insbesondere ein unterer Schalter, kann im Fußbereich der Sauglanze angeordnet sein. Wenn der Schwimmerkörper den zweiten Schalter betätigt, kann dieser beispielsweise geschlossen werden. Durch die Betätigung des zweiten Schalters erkennt die Messelektronik, dass der Schwimmerkörper eine zweite Axialposition erreicht hat, und damit das Medium einen zweiten Füllstand erreicht hat.

Die Messelektronik kann auf diese Weise mit nur zwei Schaltern drei unterschiedliche Füllzustände erkennen, beispielsweise voll, mittel und leer. Diese drei unterschiedlichen Füllstände umfassen also eine Information, dass das Gebinde mindestens bis zur bestimmten Füllhöhe befüllt ist oder höher befüllt ist, oder einen unteren Füllstand erreicht oder unterschritten hat, oder einen Zwischenzustand einnimmt.

Eine solche Sauglanze kann insoweit mit nur zwei Schaltern eine für bestimmte Anwendungsfälle ausreichende Informationen bereitstellen.

Gemäß einer vorteilhaften Ausführungsform der Erfindung ist die Sauglanze dadurch gekennzeichnet, dass die axiale Verfahrbewegung des Schwimmerkörpers hin zu dem Sauglanzenkopfbereich durch eine Anschlagfläche begrenzt ist.

Eine weitere Ausführungsform der erfindungsgemäßen Sauglanze ist dadurch gekennzeichnet, dass die Messelektronik für unterschiedliche Schaltzustände der Schalter unterschiedliche Widerstandswerte bereitstellt.

Eine weitere Ausführungsform der erfindungsgemäßen Sauglanze ist dadurch gekennzeichnet, dass die Messelektronik und/oder die Schaltern von einer Vergussmasse hermetisch umschlossen sind.

Eine weitere Ausführungsform der erfindungsgemäßen Sauglanze ist dadurch gekennzeichnet, dass die Messelektronik insbesondere über zwei elektrische Leitungen mit einer Dosiereinrichtung und/oder mit einem Zielgerät verbindbar ist.

Gemäß einer vorteilhaften Ausgestaltung der Erfindung ist die axiale Verfahrbewegung des Schwimmerkörpers hin zu dem Sauglanzenkopfbereich durch eine Anschlagfläche begrenzt. Eine solche Anschlagfläche kann durch ein Anschlagelement bereitgestellt sein. Dieses kann beispielsweise an einem Außenrohr und/oder an einem Innenrohr oder an einem Hohlprofil angeordnet werden. Der Schwimmerkörper muss bei dieser Ausführungsform nicht über die gesamte axiale Erstreckung der Sauglanze zwischen Sauglanzenfußbereich und Sauglanzenkopfbereich in Axialrichtung verlagerbar ausgebildet sein. Es genügt, wenn der Schwimmerkörper das Erreichen oder Überschreiten eines oberen Füllstandes anzeigen kann.

Gemäß einer weiteren vorteilhaften Ausgestaltung der Erfindung stellt die Messelektronik für unterschiedliche Schaltzustände der Schalter unterschiedliche Widerstandswerte bereit. So kann der Schwimmerkörper infolge eines Erreichens bestimmter Axialpositionen bestimmte Schalter betätigen und dadurch beispielsweise Leitungszweige einer Schaltung zuschalten oder abschalten. Durch das Zuschalten oder Abschalten der Leitungszweige kann der Widerstandswert eines Stromkreises oder mehrerer Stromkreise geändert werden. Infolge einer Widerstandsmessung kann damit auf einfache Weise festgestellt werden, dass ein bestimmter Schalter einen bestimmten Schalterzustand einnimmt. Dies erlaubt einem Rückschluss auf den Füllstand. Die Messelektronik kann auf diese Weise als eine passive Schaltung ausgebildet sein.

Insbesondere besteht bei diesem Ausführungsbeispiel die Möglichkeit, dass von der Messelektronik nur zwei elektrische Leitungen nach außen, hin zu der Dosiereinrichtung, geführt werden. Dort kann auf einfache Weise eine entsprechende Abfrage des Widerstandwertes und damit eine Abfrage des Schaltzustandes der unterschiedlichen Schalter auf einfache Weise erfolgen.

Bei einer weiteren vorteilhaften Ausgestaltung der Erfindung ist die Messelektronik oder Messschaltung mit einer Vergussmasse hermetisch umschlossen. Es kann auch vorgesehen sein, dass nur die Schalter mit einer Vergussmasse hermetisch umschlossen sind. Die Vergussmasse kann beispielsweise von einer Polyurethan- oder Epoxidharzmasse bereitgestellt sein. Diese kann zum Beispiel als flüssige Vergussmasse in eine die Messschaltung aufnehmende Kammer eines Hohlprofil eingefüllt werden und nach dem Aushärten die Messelektronik sicher umschließen. Auf diese Weise kann die Sauglanze in ein Gebinde, das mit einem Medium befüllt ist, eingetaucht werden, ohne dass das Risiko eines Kurzschlusses besteht. Die so umschlossene Einheit ist wartungsfrei über beliebig lange Zeiträume nutzbar.

Die Erfindung bezieht sich gemäß einem weiteren Aspekt auf eine Sauglanze nach Anspruch 15.

Die dem Anspruch 11 zugrundeliegende Aufgabe wird durch eine Sauglanze nach Anspruch 15 ebenfalls gelöst.

Das Prinzip der Erfindung besteht im Wesentlichen darin, entlang der axialen Erstreckung der Sauglanze einen oder aber mehrere Schalter vorzusehen. Die unterschiedlichen Schalter sind entweder von einem Schwimmerkörper in seinen unterschiedlichen Axialpositionen oder aber von mehreren unterschiedlichen Schwimmerkörpern betätigbar und ansprechbar.

Bei einer vorteilhaften Ausführungsform kann vorgesehen sein, dass an der Sauglanze zwei oder mehr Schwimmerkörper angeordnet sind. Jeder Schwimmerkörper kann in Abhängigkeit von seiner Axialposition einen oder gegebenenfalls auch mehrere Schalter ansprechen und auf diese Weise für unterschiedliche Schalterstellungen der Messelektronik sorgen.

Dabei kann der bei den vorherigen Ausführungsbeispielen beschriebene lange axiale Verfahrweg eines Schwimmerkörpers auf mehrere axiale Verfahrwege mehrerer Schwimmkörper aufgeteilt werden. Dies ermöglicht vorteilhafte Konstruktionen der erfindungsgemäßen Sauglanze.

Bei einer weiteren vorteilhaften Ausführungsform der Erfindung kann jedem ansprechbaren Schalter ein eigener Schwimmerkörper zugeordnet sein.

Dieser kann zum Beispiel miniaturisiert werden und muss nur entlang eines sehr kurzen Verstellweges verfahrbar ausgebildet sein. Für die Verfahrbewegung eines solchen Schwimmerkörpers, dem ein eigener Schalter zugeordnet ist, kann der Verfahrweg sehr klein gehalten werden.

Hierdurch kann der entsprechende Schwimmerkörper ebenfalls sehr klein dimensioniert werden.

Weitere Vorteile der Erfindung ergeben sich aus den nicht zitierten Unteransprüchen, sowie anhand der nachfolgenden Beschreibung der in den Zeichnungen dargestellten Ausführungsbeispiele. Darin zeigen:

Fig. 1 in einer schematischen teilgeschnittenen Übersichtsdarstellung nach Art eines Blockschaltbildes ein Ausführungsbeispiel eines erfindungsgemäßen Systems mit einer in einem Behältnis befindlichen erfindungsgemäßen Sauglanze in einer ersten Ausführungsform, einer Dosiereinrichtung und einem als Waschmaschine ausgebildeten Zielgerät,

Fig. 2      in einer teilgeschnittenen schematischen Darstellung etwa entlang Schnittlinie II-II in Fig. 1 in Alleindarstellung die Sauglanze,

Fig. 3      in einer Darstellung vergleichbar der Fig. 2 eine teilgeschnittene schematische Querschnittsdarstellung durch die Sauglanze und den Schwimmerkörper, etwa entlang Schnittlinie III-III in Fig. 1,

Fig. 4a      in einer vergrößerten schematischen prinzipartigen Darstellung den Fußbereich eines Ausführungsbeispiels einer erfindungsgemäßen Sauglanze, etwa gemäß Teilkreis IV in Fig. 1 in vergrößerter schematischer Darstellung, mit einer in ihrem Ventilsitz befindlichen Ventilkugel,

Fig. 4b      den Fußbereich der Fig. 4a in einer vergleichbaren Darstellung, wobei die Ventilkugel in einem angehobenen Zustand befindlich ist, und von ihrem Ventilsitz beabstandet ist,

Fig. 5      in einer teilgeschnittenen schematischen Prinzipansicht einen Kopfbereich der Sauglanze mit der in einer oberen Anschlagposition befindlichen Ventilkugel in einer vergrößerten Darstellung, etwa gemäß Teilkreis V in Fig. 1,

Fig. 6      ein weiteres Ausführungsbeispiel einer erfindungsgemäßen Sauglanze in einer Darstellung vergleichbar der Fig. 2, wobei die Hohlprofilanordnung insgesamt vier Kammern vorsieht, darunter drei Hohlkammem, die Saugleitungen bereitstellen,

Fig. 7      in einer teilgeschnittenen schematischen Ansicht einen Schnitt durch ein Ausführungsbeispiel einer erfindungsgemäßen Sauglanze, etwa in einer Darstellung gemäß Schnittlinie VII-VII in Fig. 3, wobei die Messelektronik schematisch dargestellt ist, und zusätzlich eine Messeinrichtung angedeutet ist,

Fig. 8      in einer teilgeschnittenen schematischen Darstellung ähnlich der Fig. 7, ein weiteres Ausführungsbeispiel einer erfindungsgemäßen Sauglanze, die Hall-Effekt-Schalter verwendet,

Fig. 9      ein weiteres Ausführungsbeispiel einer erfindungsgemäßen Sauglanze in einer schematischen teilgeschnittenen, abgebrochenen Darstellung, vergleichbar der Darstellung der Fig. 7, wobei hier nur zwei von dem Schwimmerkörper ansprechbare Schalter vorgesehen sind und ein Anschlagelement für den Schwimmerkörper dargestellt ist, welches die Verfahrbewegung des Schwimmerköpers hin zu dem Kopfbereich der Sauglanze begrenzt,

Fig. 10      das Ausführungsbeispiel der Fig. 9 mit dem in einer geänderten Position befindlichen Schwimmerkörper, die einem gegenüber Fig. 9 gesunkenen Füllstand an Medium in dem Behältnis entspricht,

Fig. 11      das Ausführungsbeispiel der Figuren 9 und 10, wobei der Schwimmerkörper weiter abgesunken ist und einen Zustand einnimmt, der einem geleerten Gebinde entspricht,

Fig 12      ein weiteres Ausführungsbeispiel einer erfindungsgemäßen Sauglanze in einer Darstellung gemäß Fig. 9, wobei nur zwei Schalter vorgesehen sind, wobei der obere der beiden Schalter in einer Position an der Sauglanze angeordnet ist, die einem Füllstandsniveau von etwa 10 % der maximalen Füllhöhe des Gebindes entspricht,

Fig. 13      ein weiteres Ausführungsbeispiel einer erfindungsgemäßen Sauglanze in einer Darstellung gemäß Fig. 9, wobei bei diesem Ausführungsbeispiel insgesamt vier von dem Schwimmerkörper ansprechbare Schalter vorgesehen sind,

Fig. 14      in einer schematischen, geänderten blockschaltbildartigen Darstellung ein weiteres Ausführungsbeispiel einer erfindungsgemäßen Sauglanze mit einer geänderten Messelektronik,

Fig. 15      in einer blockschaltbildartigen schematischen Darstellung ein Ausführungsbeispiel eines Bestandteiles der Messelektronik, der beispielsweise an der Dosiereinrichtung oder an dem Zielgerät angeordnet werden kann, sowie eine Auswerte-Einheit,

Fig. 16      ein weiteres Ausführungsbeispiel einer erfindungsgemäßen Sauglanze in einer geänderten schematischen Darstellung mit einer Vielzahl von Hall-Sensoren mit einem Schwimmer in einer ersten Position entsprechend einem ersten Füllstand,

Fig. 17      das Ausführungsbeispiel der Fig. 16 mit einem Schwimmer in einer Position entsprechend einem bezogen auf Fig. 16 gesunkenen Füllstand,

Fig. 18      das Ausführungsbeispiel der Fig. 16 mit einem wiederum in geänderter Position befindlichen Schwimmer bei entleertem Behältnis,

Fig. 19 ein weiteres Ausführungsbeispiel einer erfindungsgemäßen Sauglanze in einer schematischen, geänderten Darstellung ähnlich der Darstellung der Fig. 18 bei einem ersten Füllstand, wobei drei Schwimmerkörper vorgesehen sind, die unterschiedliche Hall-Sensoren ansprechen können,

Fig. 20 das Ausführungsbeispiel der Fig. 19 bei geändertem Füllstand, wobei der obere der drei Schwimmer an einer unteren Anschlagfläche anliegt und der mittlere der drei Schwimmer sich von einer oberen Anschlagfläche gelöst hat, und

Fig. 21 das Ausführungsbeispiel der Fig. 19 bei einem weiter gesunkenen Füllstand.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbeispiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben, dargestellt oder offenbart sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik inhaltlich vollumfänglich mit einbezogen, auch zu dem Zweck, einzelne oder mehrere Merkmale der dort offenbarten Gegenstände in einen oder in mehrere Ansprüche der vorliegenden Anmeldung mit aufzunehmen. Auch solche geänderten Ausführungsbeispiele sind - auch wenn sie in den Zeichnungen nicht dargestellt sind - von der Erfindung mit umfasst.

Das Ausführungsbeispiel eines erfindungsgemäßen Systems ist seiner Gesamtheit in den Figuren mit 10 bezeichnet.

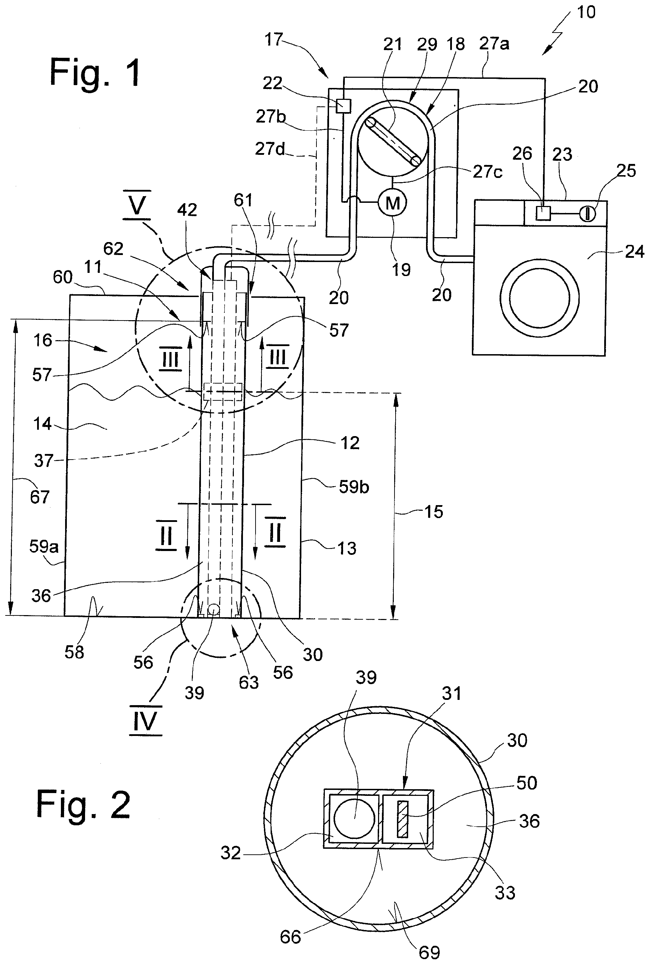

Ausweislich Fig. 1 umfasst das System 10 zunächst eine Vorrichtung 11 zur Entnahme eines Mediums 14 aus einem Behältnis 13. Die Vorrichtung 11 zur Entnahme ist in seiner Gesamtheit in den Figuren auch als Sauglanze 12 bezeichnet.

Das Ausführungsbeispiel einer erfindungsgemäßen Sauglanze 12 weist einen Kopfbereich 62 und einen Fußbereich 63 auf. Insgesamt erstreckt sich die Sauglanze 12 in Axialrichtung zwischen Kopfbereich 62 und Fußbereich 63 und ist im wesentlichen zylindrisch, nach Art eines Rohres, ausgebildet. Der innere Aufbau der Sauglanze wird später detailliert erläutert.

Die Niveauhöhe des Mediums 14 in dem Behältnis 13 wird als Füllstand 15 bezeichnet. Der Teil des Behältnisses 13, der auch bei maximaler Befüllung freigehalten ist, wird als Leerraum 16 bezeichnet.

Das Behältnis 13 kann beispielsweise ein 5-Liter- oder 10-Liter-Kanister oder Gebinde sein. Das Behältnis 13 kann aber beispielsweise auch ein 1.000-Liter-Container sein.

In der Regel wird das Behältnis im Werk derartig befüllt, dass ein kleiner Leerraum 16 verbleibt.

Das erfindungsgemäße System 10 umfasst des weiteren eine Dosiereinrichtung 17, die in Fig. 1 nur schematisch dargestellt ist. Die Dosiereinrichtung 17 umfasst wenigstens eine Pumpe 18, die bei dem Ausführungsbeispiel der Fig. 1 von einer Schlauchpumpe gebildet ist. Die Schlauchpumpe 18, oder eine andere geeignete Pumpe, kann von einem Motor 19 angetrieben werden.

Die Sauglanze 12 ist mit der Dosiereinrichtung 17 über einen Schlauch 20 verbunden. Ein Abschnitt des Schlauches 29 verläuft innerhalb der Dosiereinrichtung 17.

Eine Schlauchpumpe 18, die auch als Schlauchquetschpumpe bezeichnet wird, kann einen drehbar gelagerten Rotor 21 aufweisen, der von dem Motor 19 in Rotation versetzt wird. Sukzessive werden Schlauchabschnitte gequetscht, wodurch das Medium 14 entlang dem Schlauchabschnitt 29 gefördert wird.

Die Dosierprozesse werden von einer Steuerung 22 der Dosiereinrichtung 17 gesteuert. Die Steuerung 22 kann beispielsweise einen Mikroprozessor aufweisen, oder von einem Mikroprozessor gebildet sein.

Die Dosiereinrichtung 17 ist über die Schlauchleitung 20 mit dem Zielgefäß 23 verbunden. Dieses ist bei dem Ausführungsbeispiel der Fig. 1 von einer Waschmaschine 24 bereitgestellt. Von der Erfindung sind insbesondere auch andere Zielgefäße 23 umfasst, die z. B. von einer Geschirrspülmaschine, von einer Reinigungsmittelanlage oder von einem anderen Wasch- oder Reinigungsgerät bereitgestellt sind.

Das Zielgerät kann eine Einrichtung, z. B. einen Programmwahlschalter 25 umfassen, der über eine Steuerung 26 des Zielgerätes 23 und über eine Verbindungsleitung 27a mit der Steuerung 22 der Dosiereinrichtung 17 verbunden ist.

Wenn eine Bedienperson an dem Zielgerät 23 ein bestimmtes Wasch- oder Reinigungsprogramm einstellt, kann die Steuerung 26 des Zielgerätes 23 ein Dosierkommando an die Steuerung 22 der Dosiereinrichtung 17 übermitteln, oder beantragen, dass dem Zielgerät 23 zu einem bestimmten Zeitpunkt eine bestimmte Dosiermenge eines bestimmten Mediums zugeführt wird.

Die Dosiereinrichtung 17 kann zu dem gewünschten Zeitpunkt über die elektrische Verbindungsleitung 27b den Motor 19 ansprechen, der über die Verbindungs- oder Wirkleitung 27c eine entsprechende Rotation des Rotors 21 bewirkt.

Je nach Wahl der Art der Pumpe 18 kann ein entsprechender Antrieb 19 der Pumpe 18 für eine bestimmte Zeitdauer oder für eine bestimmte Zahl von Umdrehungen oder dergleichen angesprochen werden, um eine Förderung eines vorherbestimmten Volumens an Medium 14 zu bewirken.

Die Sauglanze 12 wird im folgenden anhand des Ausführungsbeispiels der Figuren 1 bis 5 erläutert:

Ausweislich Fig. 2 umfasst die Sauglanze 12 ein Außenrohr 30 mit kreisförmigem Querschnitt.

Innerhalb des Außenrohrs 30 ist ein Hohlprofil 31 angeordnet. Dieses umfasst in dem Ausführungsbeispiel der Fig. 2 eine erste Kammer 32 und eine zweite Kammer 33.

Die erste Kammer 32 bildet die Saugleitung 49 für das Medium aus. Hierin ist eine Ventilkugel 39 angeordnet, deren Funktion später beschrieben wird.

Die zweite Kammer 33 bildet einen Unterbringungsraum für eine Messelektronik 50 aus.

Während die zweite Kammer 33 geschlossen ist, und insbesondere bodenseitig abgedichtet ist, ist die eine Saugleitung 49 bereitstellende erste Kammer 32 im Normalfall von dem Medium 14 geflutet.

Zwischen dem Hohlprofil 31 und dem Außenrohr 30 befindet sich ein Bewegungsraum 36. Dieser Bewegungsraum 36 wird bei in das Medium 14 eingetauchter Sauglanze 12 ebenfalls geflutet.

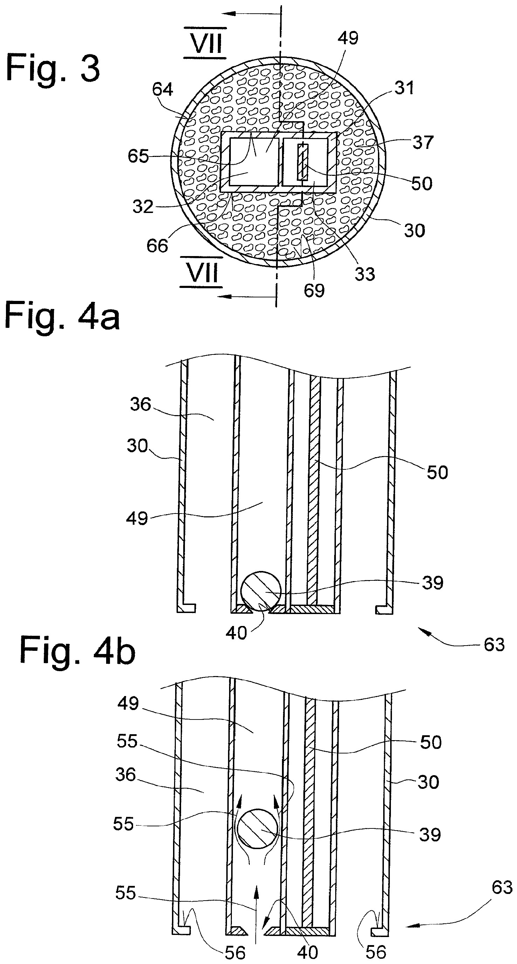

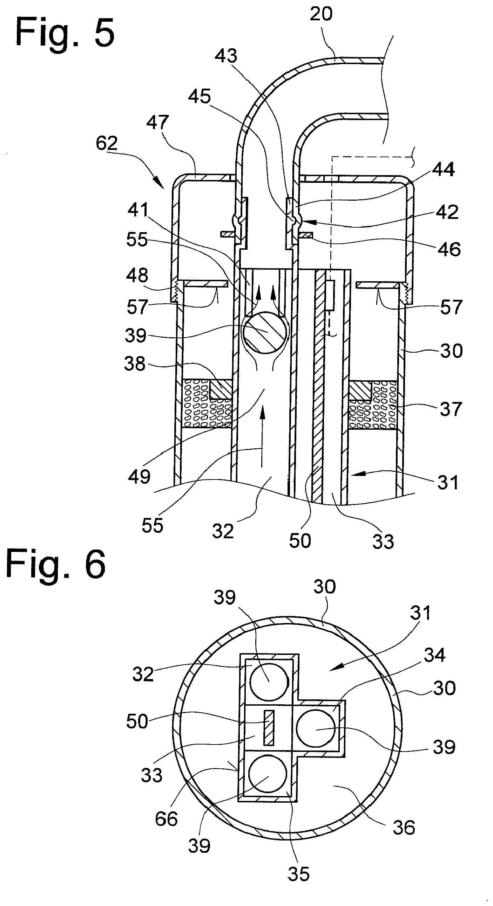

In dem Bewegungsraum 36 ist ein Schwimmerkörper 37 angeordnet, und zwischen einer unteren Position und einer oberen Position verlagerbar. Der Schwimmerkörper ist, wie sich in Zusammenschau der Figuren 3 und 5 ergibt, von einem ringförmigen Körper gebildet. Die Außenumfangsfläche 64 des Schwimmerkörpers 37 ist im wesentlichen kreisförmig ausgebildet und insoweit an die Innenumfangsfläche des Außenrohrs 30 angepasst.

Die Innenumfangsfläche 65 des Schwimmerkörpers 37 ist an die Außenumfangsfläche 66 der Hohlprofilanordnung 31 angepasst. Bei dem Ausführungsbeispiel der Fig. 2 ist die Außenumfangsfläche 66 des Hohlprofils 31 im wesentlichen rechteckförmig, so dass der Schwimmerkörper 37 ausweislich Fig. 3 ebenfalls eine im wesentlichen rechteckförmige Innenumfangsfläche aufweist. Für den Fall, dass die Außenumfangsfläche 66 des Hohlprofils 31 eine andere Geometrie einnimmt, wie beispielsweise bei dem Ausführungsbeispiel der Fig. 6, ist die Innenumfangsfläche 65 des Schwimmerkörpers 37 vorteilhaft entsprechend angepasst.

Der Schwimmerkörper kann innerhalb des Bewegungsraums 36 zwischen einer unteren Anschlagfläche 56 und einer oberen Anschlagfläche 57 verlagert werden.

Der Abstand zwischen der unteren Anschlagfläche 56 für den Schwimmerkörper 37 und der oberen Anschlagfläche 57 für den Schwimmerkörper 37 begrenzt den Verfahrweg 67 entlang dem der Schwimmerkörper 37 verlagerbar ist.

Der Schwimmerkörper 37 besteht aus einem Material, welches auf dem Medium 14 aufschwimmt. Beispielsweise kommen Schaumstoffe, wie z. B. Polystyrol oder andere, insbesondere geschlossenporige Materialien, z. B. auf der Basis von Partikelschäumen, in Betracht.

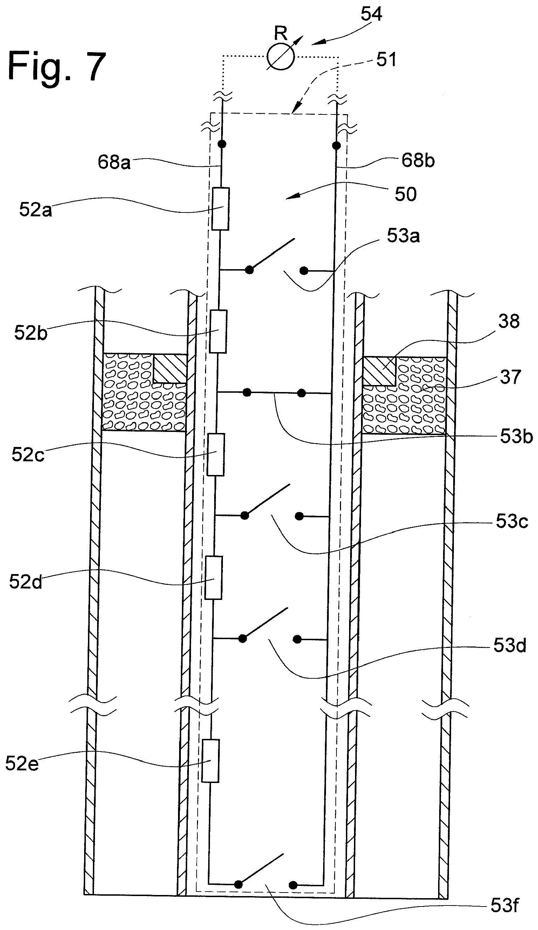

Ausweislich des Ausführungsbeispiels der Fig. 7 ist deutlich, dass an dem Schwimmerkörper 37 ein Magnet 38 angeordnet ist. Dieser kann ebenfalls eine Ringform besitzen.

In der Saugleitung 49 befindet sich eine Ventilkugel 39. Diese ist in dem Zustand der Sauglanze 12 gemäß Fig. 4a auf ihrem Ventilsitz 40 angeordnet und verschließt die Saugleitung 49 nach unten.

Die Ventilkugel 39 ist insbesondere schwerer als Wasser oder schwerer als das in dem Behältnis 13 befindliche Medium 14.

Ohne Einwirkung äußerer Kräfte liegt die Ventilkugel 39 auf ihrem Ventilsitz 40 auf und verschließt die Saugleitung 49 nach unten hin.

Für den Fall, dass die Pumpe 18 angetrieben wird, und eine Saugkraft auf die Saugleitung 49 aufbringt, wird aus dem Behältnis 13 Medium 14 gefördert. Das aus dem Behältnis durch den Ventilsitz 40 hindurch strömende Medium 14 nimmt die Ventilkugel 39 mit, und hebt die Kugel 39 dabei von dem Ventilsitz 40 ab. Diesen Zustand zeigt Fig. 4b.

Dort ist auch erkennbar, dass entlang der Strömungsrichtungspfeile 55 Medium 14 die Ventilkugel 39 seitlich umströmen kann und so durch die Saugleitung 49 hindurch gefördert werden kann.

Um zu verhindern, dass die Ventilkugel 39 gänzlich aus der Saugleitung 49 nach oben hin herausgezogen wird, sind am Kopfbereich 62 der Sauglanze 12 in Fig. 5 angedeutet Ventilkugelabstandshalter 41 vorgesehen. Diese begrenzen den Bewegungsraum der Ventilkugel 39 nach oben, sind aber von dem Medium 14 durchströmbar, was hier ebenfalls durch Strömungspfeile 55 angedeutet ist.

Die Ventilkugel 39 beeinträchtigt also die Entnahme des Mediums 14 aus dem Behältnis 13 nicht. Wird allerdings die Sauglanze 12 aus dem Behältnis 13 herausgenommen, dichtet die Ventilkugel 39 die Saugleitung nach unten hin ab und verhindert beispielsweise in Heraustropfen der Chemikalie aus der Saugleitung 49.

Auch kann die Ventilkugel 49 die Saugleitung nach unten hin verschließen, wenn ein hoher Druck auf der Saugleitung lastet, beispielsweise weil die Dosiereinrichtung 17 defekt ist, oder weil eine hohe Flüssigkeitssäule in der Saugleitung 49 steht, beispielsweise weil das Behältnis 13 im Keller eines Gebäudes angeordnet ist, und die Dosiereinrichtung 17 in einem Stockwerk oberhalb des Behältnisses 13 angeordnet ist.

In diesem Fall kann z. B. eine mehrere Meter hohe Flüssigkeitssäule auf der Saugleitung 49 anstehen. Die an dem Ventilsitz 40 anliegende Ventilkugel 39 kann so einen Rückfluss der Chemikalie in das Behältnis 13 sicher verhindern.

Ausweislich der Darstellung der Fig. 5 ist erkennbar, dass eine Schlauchanschlussstelle 42 zur Verbindung der ersten Kammer 32 des Hohlprofils 31 mit einer Schlauchleitung 20 im Bereich des Kopfbereiches 62 der Sauglanze 12 angeordnet ist.

Die erste Kammer 32 ist mit einem Schlauchanschlussstutzen 43 ausgestattet, der einen außenseitigen Haltevorsprung 45 nach Art einer umlaufenden Rippe aufweisen kann. Der Schlauch 20 mit seinem Endbereich 44 wird über diese Rippe 45 geschoben, und kann zusätzlich optional durch einen Klemmring 46 daran festgehalten werden.

Die Schlauchanschlussstelle 42 kann sich bei diesem Ausführungsbeispiel innerhalb der Hüllkontur der Sauglanze 12 befinden.

Bei dem Ausführungsbeispiel der Fig. 5 ist ein Deckelelement 47 an der Sauglanze 12 vorgesehen, das unter Zuhilfenahme eines Gewindes 48 auf das Außenrohr 30 aufgeschraubt sein kann. Auch andere Ausführungsbeispiele einer Ausgestaltung des Kopfbereiches 62 einer Sauglanze 12, die ohne einen aufschraubbaren Deckel auskommen, sind von der Erfindung umfasst.

Angemerkt sei, dass die Hohlprofilanordnung 31 auf nicht dargestellte Weise im Bereich des Kopfes 62 der Sauglanze 12 und im Bereich des Fußes 63 der Sauglanze 12 mit dem Außenrohr 30 verbunden sein kann, um eine feste, relative und dauerhafte Positionierung relativ zu dem Außenrohr 30 zu ermöglichen.

Die Befestigungsstellen liegen aber - vorzugsweise axial betrachtet - außerhalb des Verfahrweges 67 des Schwimmerkörpers 37, um die Bewegung des Schwimmerkörpers 37 nicht zu beeinträchtigen.

Die Sauglanze 12 liegt mit ihrem Fußbereich 63 an einem Boden 58 des Behältnisses 13 auf. Das Behältnis 13 kann mehrere Seitenwände 59a, 59b aufweisen, und beispielsweise kubisch ausgebildet sein, aber alternativ auch im Raum gekrümmte Abschnitte oder eine polygonale Struktur aufweisen. Eine Öffnung 61 ist in der Deckenwand 60 des Behältnisses 13 angeordnet, um einen Eintritt der Sauglanze 12 in das Behältnis 13 zu ermöglichen. Die Öffnung 61 kann initial eine Versiegelung aufweisen und ggf. auch eine Wiederverschließbarkeit gewährleisten.

Das Hohlprofil 31 weist eine zweite Kammer 33 auf, die zur Unterbringung einer Messelektronik dient, die in ihrer Gesamtheit in den Figuren mit 51 bezeichnet ist. Die Messelektronik 51 ist auf einer Leiterplatte 50 aufgebaut, und umfasst eine Vielzahl elektronischer Bauelemente, beispielsweise Widerstände 52a, 52b, 52c, 52d und Schalter 53a, 53b, 53c, 53d. Mit der Messelektronik 51 kann eine Messeinrichtung 54 zusammenwirken, die in Fig. 7 schematisch dargestellt ist. Die Messeinrichtung 54 kann beispielsweise eine Widerstandsmesseinrichtung umfassen.

Die Leiterplatte 50 und/oder die Messelektronik 51 sind vollständig innerhalb der Sauglanze 12 angeordnet. Die Leiterplatte und/oder Messelektronik erstreckt sich dabei entlang des Verfahrweges 67 des Schwimmerkörpers 37.

Bei dem Ausführungsbeispiel in den Zeichnungen umfasst die Messelektronik 51 zahlreiche elektrische Widerstände 52a, 52b, 52c, 52d, die zueinander in Reihe geschaltet sind. Darüber hinaus ist die in Fig. 7 ersichtliche und dort schematisch dargestellte Schaltung der Messelektronik 51 derartig konzipiert, dass die Widerstände 53a, 53b, 53c, 53d äquidistant zueinander angeordnet sind, und etwa gleich verteilt entlang des Verfahrwegs 67 des Schwimmerkörpers 37 angeordnet sind.

Dabei ist die Anordnung der Widerstände und des Schwimkörpers vorteilhaft derartig getroffen, dass der Schwimmerkörper 37 einen Magneten 38 aufweist, und jeder der Schalter 53a, 53b, 53c, 53d als ein Reed-Schalter ausgebildet ist. Für den Fall, dass der Magnet 38 des Schwimmerkörpers 37 an den entsprechenden Schalter - z. B. gemäß Fig. 7 an den Schalter 53b - angenähert ist, wird der entsprechende Schalter geschlossen.

Bei einer alternativen Schaltung kann vorgesehen sein, dass der Schalter dann geöffnet wird.

Der Einfachheit halber soll für die weitere Beschreibung des Ausführungsbeispiels dieser Patentanmeldung angenommen werden, dass der Reed-Schalter 53a, 53b, 53c, 53d jeweils geschlossen wird, wenn der Magnet 38 angenähert ist.

Die Anordnung ist dabei so getroffen, dass in jeder Position des Schwimmerkörpers 37 immer jedenfalls ein Schalter 53a, 53b, 53c, 53d angesprochen, insbesondere geschlossen, ist.

Für den Fall, dass sich der Schwimmerkörper 37 in einer in Fig. 7 nicht dargestellten untersten Position befindet, weil beispielsweise das Behältnis 13 restentleert ist, sind sämtliche Schalter geöffnet. Nur der unterste aller Schalter, bezogen auf Fig. 7, beispielsweise der Schalter 53f, ist in dieser Position geschlossen. Der Strom zwischen den Leitungszweigen 68a und 68b muss insoweit durch die Reihenschaltung sämtlicher Widerstände 52a, 52b, 52c, 52d, 52e fließen. Damit weist die Messelektronik 51 einen maximalen Widerstandswert auf. Ggf. kann sogar vorgesehen sein, dass der Schalter 53f in dieser Position des Schwimmerkörpers geöffnet ist, so dass der Widerstand unendlich ist, da der entsprechende Stromkreis unterbrochen ist.

Für den Fall, dass der Schwimmerkörper 37 aufgrund eines hohen Füllstandes 15 an Medium 14 in dem Behältnis 13 in einer oberen Position befindlich ist, und z. B. die Position gemäß Fig. 7 einnimmt, kann der Magnet 38 den Reed-Schalter 53b schließen. Der Strom, der durch die Verbindungszweige 28a, 28b hindurch fließt, muss also ausgehend von dem Leitungszweig 68a zunächst durch den Widerstand 52a und nachfolgend durch den Widerstand 52b fließen, und kann dann über den Leitungsweg 68 zurück fließen. Der Gesamtwiderstand der Messelektronik 51 wird insoweit bei dieser Schalterstellung durch die beiden Widerstände 52a und 52b in Reihenschaltung, also durch Addition der Widerstände, gebildet.

Würde ausgehend von dem Füllstand gemäß der Schwimmerposition gemäß Fig. 7 der Füllstand 15 des Mediums 14 in dem Behältnis 13 sinken, würde der Schwimmer 37 bezogen auf die Position der Fig. 7 ebenfalls nach unten sinkend, zunächst den Schalter 53c schließen, und nachfolgend den Schalter 53b öffnen. Dann wäre der Widerstand erhöht, da der Strom ausgehend von dem Leitungszweig 68a nun durch die drei Widerstände 52a, 52b und 52c fließen muss.

Die unterschiedlichen Widerstände der Messelektronik 51 lassen somit einen Schluss über eine relative Position des Schwimmerkörpers 37 zu. Damit kann der Füllstand des Behältnisses 13 kontinuierlich zwischen einem Leerstand und einer maximalen Füllhöhe überwacht werden.

Diese Füllstandinformation kann als Messsignal von der Messelektronik 51 bzw. von der Messeinrichtung 54 an die Steuerung 22 der Dosiereinrichtung 17 übermittelt werden. Alternativ kann ein Abfragesignal von der Steuerung 22 der Dosiereinrichtung 17 initiiert werden, und über die Verbindungsleitung 27d an die Messelektronik 51 herangetragen werden. Sodann kann eine Auswertung des Messvorgangs durch die Steuerung 22 erfolgen.

Neben der beschriebenen Anordnung eines Magneten 38 und des Schimmerkörpers 37 und der Ausbildung der Schalterelemente 53a, 53b, 53c, 53d als Reed-Schalter, kommen auch andere physikalische Schalt-Verfahren in Betracht, um in unterschiedlichen Positionen eines Schwimmerkörpers 37 unterschiedliche Messsignale zu erzeugen:

So können die Schalter 53a, 53b, 53c, 53d beispielsweise als optische Schalter, akustische Schalter, induktive oder kapazitive Schalter ausgebildet sein, und unterschiedliche Positionen des Schwimmerkörpers 37 detektieren.

Das Außenrohr 30 stellt einen Wandungsabschnitt bereit, der den Schwimmerkörper 37 außenseitig vollständig umfängt. Damit ist der Schwimmerkörper 37 geschützt untergebracht. Eine Beschädigung des Schwimmerkörpers 37 kann insoweit bei Entnahme der Sauglanze 12 aus dem Behältnis 13 sicher vermieden werden.

Gleichermaßen ist der Schwimmerkörper 37 derartig ausgebildet, dass er mit seiner Innenumfangsfläche 65 die Hohlprofilanordnung 31 umschließt. Hierdurch wird eine besonders sichere Lagerung des Schwimmerkörpers 37 ermöglicht.

In den Zeichnungen nicht dargestellt ist, dass sowohl zwischen der Innenumfangsfläche 39 des Außenrohres 30 und der Außenumfangsfläche 64 des Schwimmerkörpers 37 ein gewisses Bewegungsspiel bereitgestellt wird, als auch das zwischen der Innenumfangfläche 65 des Schwimmerkörpers 37 und der Außenumfangsfläche 66 der Hohlprofilanordnung 31 ein entsprechendes Bewegungsspiel bereitgestellt wird, um Bewegungen des Schwimmerkörpers 37 zuzulassen.

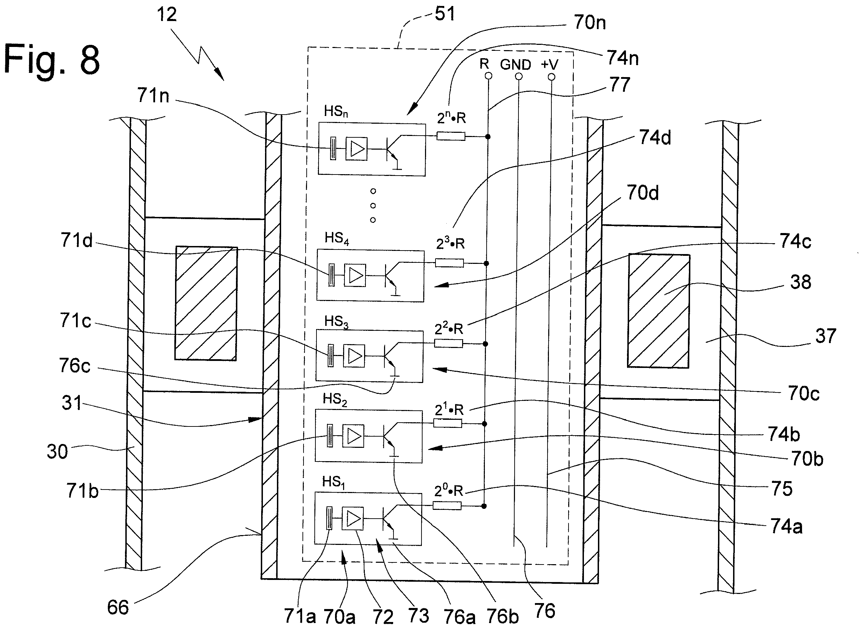

Ausweislich Fig. 8 soll nun ein weiteres Ausführungsbeispiel einer erfindungsgemäßen Sauglanze 12 anhand der schematischen Prinzipskizze erläutert werden:

Fig. 8 zeigt - in analoger Darstellung zu Fig. 7 - einen Abschnitt einer Sauglanze mit Außenrohr 30 und Hohlprofil 31 sowie einen Schwimmerkörper 37, der einen Magnet 38 aufweist.

Bei diesem Ausführungsbeispiel umfasst die Messelektronik 51 eine Vielzahl von Schaltern, die als Hall-Sensor-Schalter 70a, 70b, 70c, 70n ausgebildet sind. Die Hall-Sensor-Schalter 70a, 70b, 70c, 70n sind entlang der axialen Erstreckung der Sauglanze 12 angeordnet.

Jeder Hall-Sensor-Schalter 70 kann einen Hall-Sensor 71a, 71b, 71c, 71n umfassen, der die Präsenz eines Magneten 38 feststellen kann. Jeder Hall-Sensor-Schalter 70a, 70b, 70c, 70n kann darüber hinaus einen Verstärker 72 und einen Transistor 73 umfassen.

Der Hall-Sensor-Schalter 70a, 70b, 70c, 70n wird über eine Spannungsversorgungsleitung 75 mit Betriebsspannung versorgt: Wird die Präsenz eines Magneten festgestellt, schaltet der entsprechende Hall-Sensor-Schalter 70a, 70b, 70c, 70n den jeweiligen Transistor 73 durch, so dass zwischen dem jeweiligen Widerstand 74a, 74b, 74c, 74n und dem jeweiligen Masseanschluss 76a, 76b, 76c, 76n Strom fließen kann.

Die Positionierung der Schalter sowie die Beabstandung der einzelnen Hall-Sensor-Schalter 70a, 70b, 70c, 70n voneinander wird derartig vorgenommen, dass in jeder Position des Schwimmerkörpers 37 wenigstens ein Hall-Sensor-Schalter 70a, 70b, 70c, 70n angesprochen und/oder geschlossen wird.

Dadurch, dass die den einzelnen Hall-Sensor-Schaltern 70a, 70b, 70c, 70n zugeordneten Widerstände 74a, 74b, 74c, 74n unterschiedlich gewählt sind, kann die Messelektronik beim Messen eines Widerstandes zwischen der Widerstandsleitung 77 und der Masse eindeutig feststellen, welcher Hall-Sensor-Schalter 70a, 70b, 70c, 70n sich in einem Schließzustand befindet und hieraus eine Schlussfolgerung treffen, in welcher Position sich der Schwimmerkörper befindet. Hieraus wiederum kann berechnet werden, welches Flüssigkeitsniveau sich in dem Gebinde befindet.

Die Widerstände 74a, 74b, 74c, 74n, die den unterschiedlichen Hall-Sensor-Schaltern 70a, 70b, 70c, 70n zugeordnet sind, können unterschiedlich gewählt werden, um die Unterscheidung der einzelnen Hall-Sensor-Schalter 70a, 70b, 70c, 70n zu vereinfachen. Dies ermöglicht auch eine möglichst einfache Widerstandsmessung. Beispielsweise können sich die zwei benachbart angeordneten Hall-Sensor-Schaltern zugeordneten Widerstände jeweils verdoppeln, so dass sich eine Reihe oder Folge der Art $R_n = R_o * 2^n$ ergibt.

Es kommen aber auch beliebige andere Arten von Entscheidungskriterien in Betracht, um die unterschiedlichen Hall-Sensor-Schalter unterscheidbar auszubilden.

Die einzelnen Hall-Sensor-Schalter 70a, 70b, 70c, 70n können beispielsweise über einen Transistorausgang mit einem Open-Kollektor verfügen. Auch andere Transistoren können eingesetzt werden.

Bei dem Ausführungsbeispiel der Fig. 8 sind die dem Gebindeboden benachbart angeordneten Hall-Sensor-Schalter 70a mit einem kleinen Widerstand 74a und die von dem Boden des Gebindes am weitesten entfernt angeordneten Hall-Sensor-Schalter 70n mit einem maximalen Widerstand 74n ausgestattet. Es kann aber alternativ auch eine andere, z. B. umgekehrte Anordnung von Widerständen getroffen sein.

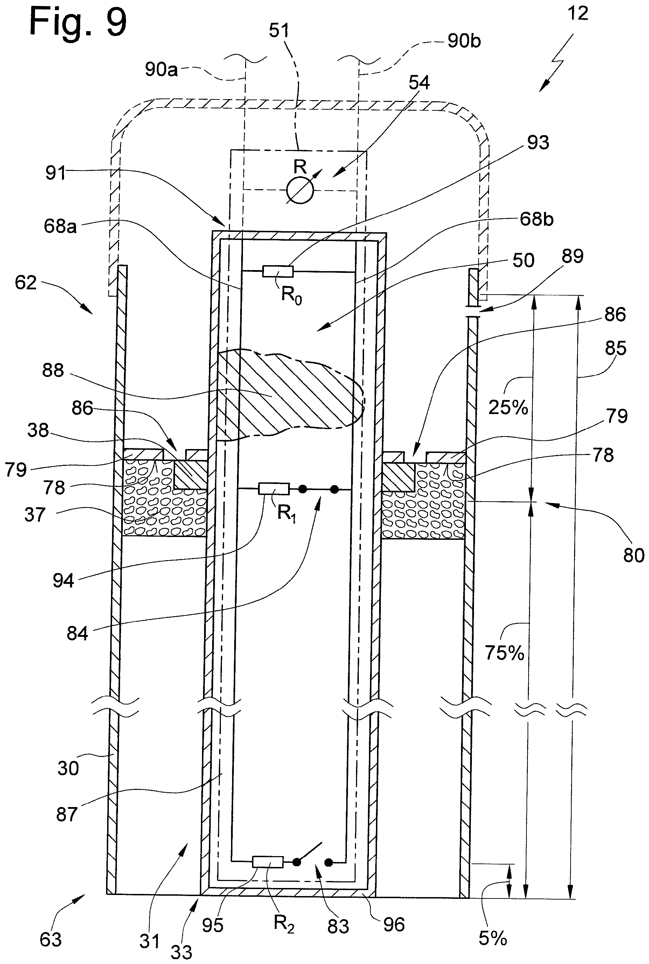

Im Folgenden soll anhand der Ausführungsbeispiele der Figuren 9 bis 13 erläutert werden, wie bei Ausführungsformen der Erfindung mit nur wenigen Schaltern eine Vielzahl von Informationen erhältlich ist. Zunächst soll das Ausführungsbeispiel der Figuren 9 bis 11 erläutert werden:

Ausweislich Fig. 9 weist eine Sauglanze - wie schon bei den vorherigen Ausführungsbeispielen - ein Außenrohr 30 auf, in dem ein Hohlprofil 31 angeordnet ist. In dem Hohlprofil 31 ist eine Kammer 33 gemäß Fig. 2 angeordnet, in der eine in Fig. 9 nicht dargestellte Leiterplatte 50 für eine Messelektronik 51 angeordnet ist. Die Figuren 9 bis 13 zeigen jeweils nur schematisch angedeutet die Messelektronik 51, die bei diesen Ausführungsbeispielen jeweils als Messschaltung 91, nämlich als Widerstandsmessschaltung, ausgebildet ist.

Die gesamte Messelektronik 51, insbesondere auch die in Fig. 9 nicht dargestellte Leiterplatte, und damit insbesondere auch die gesamte Messschaltung 91, ist von einer in den Figuren 9 bis 13 lediglich abgebrochen und schematisch dargestellten Vergussmasse 88 umschlossen.

Die Vergussmasse 88 kann beispielsweise von einem Epoxidharz bereitgestellt sein. Die Ausführungsbeispiele der Figuren 9 bis 13 zeigen die Vergussmasse jeweils in abgebrochener Darstellung in Schraffur. Eine solche Vergussmasse kann gemäß der Erfindung bei allen Ausführungsbeispielen vorgesehen sein.

Ein wesentlicher Vorteil besteht darin, dass aus der durch die Vergussmasse 88 hermetisch abgeschlossenen Einheit der Messelektronik 51 bzw. der Messschaltung 91 nur zwei elektrische Leitungen 90a, 90b herausragen, die mit der Dosiereinrichtung 10 (gemäß Fig. 1) verbindbar sind. Die Messschaltung 91 stellt dabei vorteilhaft ein rein passives Element bereit, das ohne eine Spannungsversorgung auskommen kann.

Gemäß Fig. 9 weist die Sauglanze einen Sauglanzenkopfbereich 62 und einen Sauglanzenfußbereich 63 auf. Die maximale Füllhöhe des in Fig. 9 nicht dargestellten Behältnisses 13 ist in Fig. 9 mit 85 bezeichnet.

Ein Schwimmerkörper 37 ist, wie bei den vorherigen Ausführungsbeispielen, in Axialrichtung verfahrbar angeordnet. Er liegt in der Position gemäß Fig. 9 an einem Anschlagelement 79 an, welches eine Anschlagfläche 78 bereitstellt. Das Anschlagelement 79 begrenzt die Verfahrbewegung des Schwimmerkörpers 37 hin zu dem Kopfbereich 62 der Sauglanze 12. Das Anschlagelement 79 kann an dem Hohlprofil 31 und/oder an dem Außenrohr 30 angebracht sein.

Im Bereich der Anschlagfläche 78 ist ein oberer Schalter 84 vorgesehen, dem ein erster, oberer Schaltwiderstand 94 zugeordnet ist. Befindet sich der Schwimmerkörper 37 in seiner an der Anschlagsfläche 78 anliegenden Position gemäß Fig. 9 kann der Schwimmerkörper den oberen Schalter 84 ansprechen und betätigen, dass heißt, in einen in Fig. 9 dargestellten Schließzustand überführen. Dieser Schließzustand wird erreicht, wenn das Medium im Behältnis eine Füllhöhe von 75 % oder mehr aufweist.

Die Positionierung der Anschlagfläche und des von dem Schwimmerschalter 37 ansprechbaren oberen Schalters 84 ist also so getroffen, dass dann, wenn das Medium eine Füllhöhe 80 aufweist, die zumindest 75 % der maximalen Füllhöhe 85 beträgt, der obere Schalter 84 geschlossen wird.

Die Messschaltung 91 weist in dieser Position des Schwimmkörpers einen Widerstandwert R auf, der durch die beiden Widerstände 93 ($R_0$) und 94 ($R_1$) nach der Formel

$$R = \frac{R_1 \; x \; R_0}{R_1 + R_0}$$

bereitgestellt wird, da diese beiden Widerstände $R_0$ und $R_1$ parallel geschaltet sind.

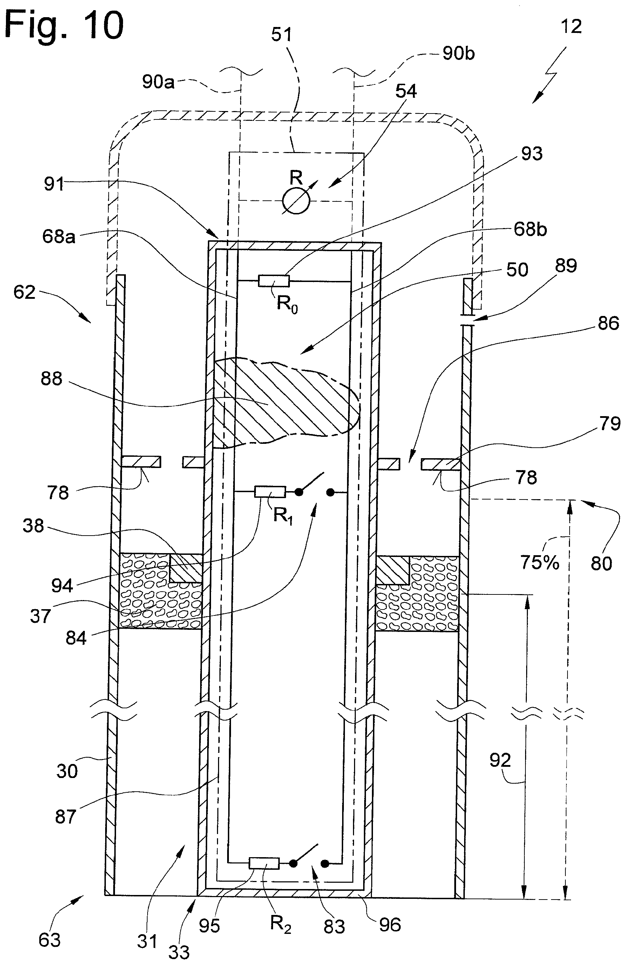

Wenn das Niveau des Mediums singt und der Schwimmerkörper 37 sich von der Anschlagfläche 78 löst und nach unten verlagert wird, geht mit dieser Bewegung des Schwimmerkörpers 37 eine Öffnung des Schalters 84 einher. Der Schwimmer befindet sich dann in einer Zwischenstellung, die in Fig. 10 dargestellt ist.

In diesem Zustand sind die beiden Schalter 83 und 84 geöffnet. Die Messschaltung 91 weist dann einen Widerstandswert $R = R_0$ des Widerstandes 93 auf.

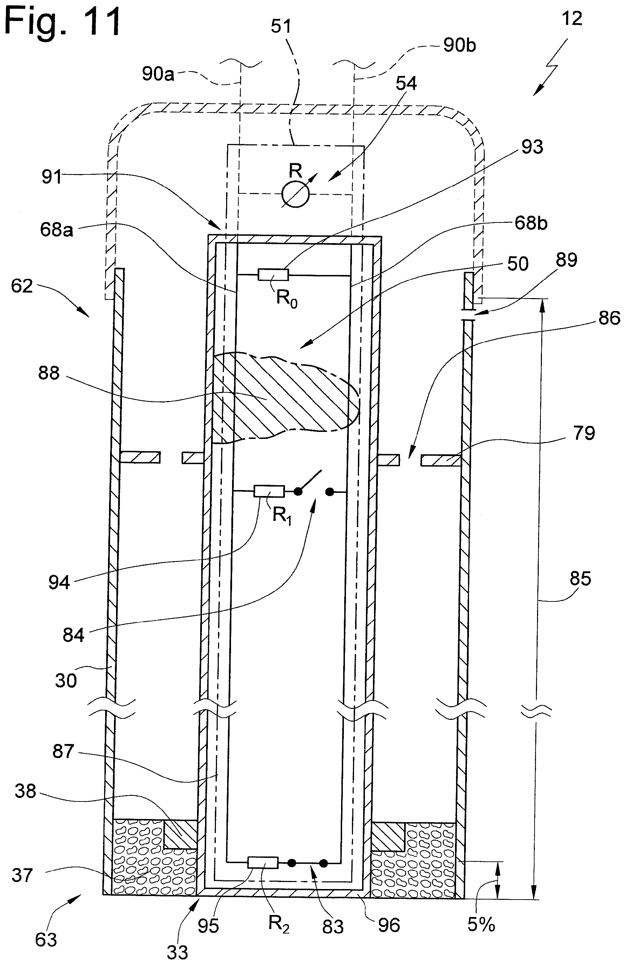

Wenn der Schwimmerkörper eine Position gemäß Fig. 11 erreicht, die einem vorbestimmten Schwellwert, von zum Beispiel 5 % des maximalen Füllstandes entspricht, kann der Schwimmerkörper 37 den unteren Schalter 83 betätigen und damit schließen. Nun wird bei der Schaltung 91 ein anderer Widerstandswert bereitgestellt, der durch die Widerstandswerte $R_0$ des Widerstandes 93 und den Widerstandswert $R_2$ des Widerstandes 95, des sogenannten zweiten Schaltwiderstandes, bereitgestellt wird. Nun berechnet sich der Gesamtwiderstand R aus:

$$R = \frac{R_0 \; x \; R_2}{R_0 + R_2}$$

Die Widerstände $R_0$, $R_1$ und $R_2$ besitzen freilich deutlich unterschiedliche Werte.

Mit einer Sauglanze gemäß der Figuren 9 bis 11 kann durch Anordnung von nur zwei Schaltern 83 und 84 eine Information über drei unterschiedliche Niveaustände erhalten werden. Die Niveaustände können beispielsweise lauten:

a) Behältnis ist voll (das heißt mindestens zu 75 % voll),

b) Behältnis ist leer (zum Beispiel Behältnis hat höchstens noch 5 % der maximalen Füllhöhe),

c) Behältnis ist mittelvoll, das heißt, der Füllstand beträgt zwischen 5 % und 75 %.

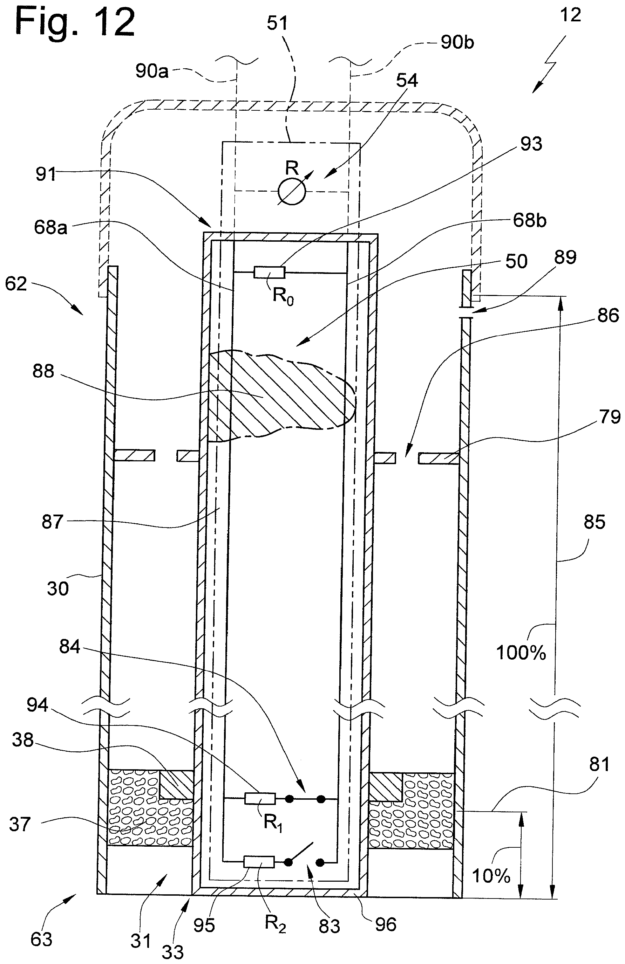

Ein anderes Ausführungsbeispiel zeigt 12: Dort ist ein erster Schalter 84 bei einer Füllhöhe 81 vorgesehen, die etwa 10 % des maximalen Füllstandes entspricht. Sinkt dieser Schwimmerkörper 37 in eine Position gemäß Fig. 12, und betätigt er auf diese Weise den oberen Schalter 84, kann dies einer mit der Sauglanze verbundenen Dosiereinrichtung anzeigen, dass ein nur noch geringer Medienrest enthalten ist und beispielsweise eine Nachbestellung initiiert werden muss.

Wenn der Schwimmerkörper 37 dann weiter absinkt, zum Beispiel auf einen Füllstand, in dem er den unteren Schalter 83 betätigt, kann dies als komplette Leermeldung von der Dosiereinrichtung verstanden werden. Auch hier sind freilich die Widerstände $R_1$ und $R_2$ unterschiedlich gewählt.

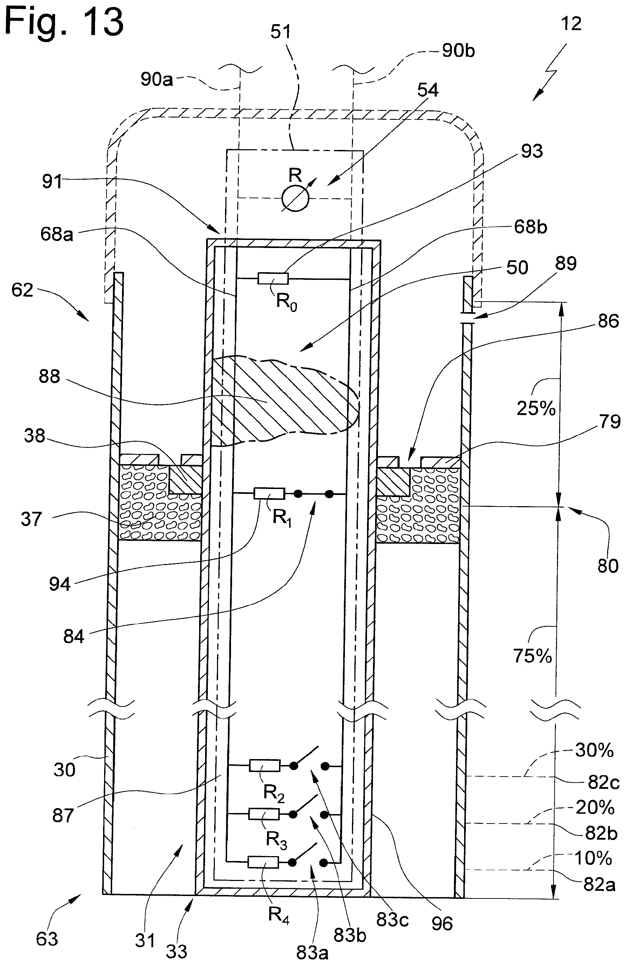

Ein weiteres Ausführungsbeispiel zeigt Fig. 13: Hier sind insgesamt vier Schalter 84, 83a, 83b, 83c vorgesehen, denen unterschiedliche Schaltwiderstände $R_1$, $R_2$, $R_3$, $R_4$ zugeordnet sind. Die unterschiedlichen Schalter 83a, 83b und 83c entsprechen unterschiedlichen Füllständen von 10 % (Füllhöhe 82a), 20 % (Füllhöhe 82b) und 30 % (Füllhöhe 82c).

Bei dem Ausführungsbeispiel der Fig. 9 ist das Anschlagelement 79 von einer mit einer Durchströmöffnung 86 versehenen Ringscheibe gebildet. Durchströmöffnungen 86 müssen in jedem Falle in dem Bereich zwischen dem Hohlprofil 31 und dem Außenrohr 30 vorhanden sein, um eine ordnungsgemäße Bewegung des Schwimmerkörpers 37 zu ermöglichen.

Bei dem Ausführungsbeispiel der Fig. 9 ist die Kammer 33 des Hohlprofils 31 in einem schematisch angedeuteten Gehäuse 96 dargestellt, dessen Innenraum 87 vollständig mit Vergussmasse 88 befüllt ist. Von der Erfindung ist auch umfasst, wenn nur Teile der Messelektronik 51 bzw. der Messschaltung 91 von einer Vergussmasse umhüllt sind.

Bei dem Ausführungsbeispiel der Messschaltung 91 gemäß Fig. 9 ist neben dem ersten Schaltwiderstand 94 und dem zweiten Schaltwiderstand 95 auch ein Anfangswiderstand 93 vorgesehen, der als $R_0$ bezeichnet ist. Bei anderen, in den Zeichnungen nicht dargestellten Ausführungsbeispielen muss ein solcher Anfangswiderstand nicht vorhanden sein.

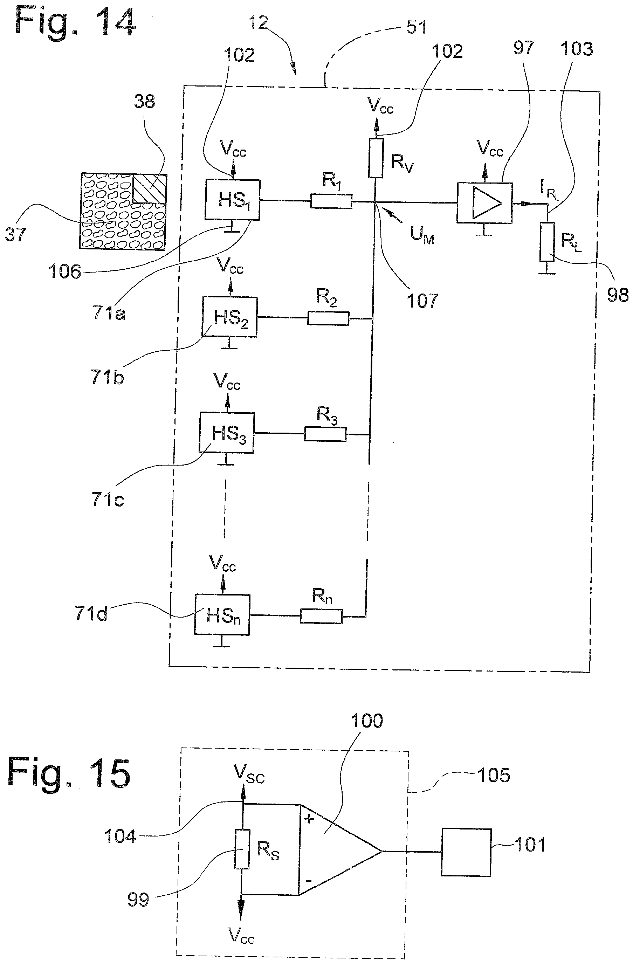

Ein weiteres Ausführungsbeispiel einer erfindungsgemäßen Sauglanze zeigt Fig. 14 in einer schematischen, blockschaltbildartigen Darstellung. Angemerkt sei, dass sich diese Darstellung von der Darstellung der vorherigen Ausführungsbeispiele etwas unterscheidet:

Von einem Schwimmerkörper 37 mit einem Magnet 38 ist der Übersichtlichkeit halber nur ein Teil, zum Beispiel eine Hälfte, dargestellt. Der Schwimmerkörper 37 ist wiederum entlang der Messelektronik 51 in Axialrichtung der Sauglanze 12 verfahrbar.

Dargestellt ist in Fig. 14 nur das Blockschaltbild dieser Messelektronik 51. Die Anordnung und die Positionierung dieser Messelektronik 51 kann der der vorherigen Ausführungsbeispiele entsprechen.

Bei dem Ausführungsbeispiel der Fig. 14 umfasst die Messelektronik eine Mehrzahl von Hall-Sensoren 71a, 71b, 71c, 71d, 71e, 71f, 71g, 71h, 71i, 71j, 71k, 71l, 71m, 71n, die in dem Blockschaltbild jeweils als $HS_1$, $HS_2$, $HS_3$ usw. bezeichnet sind.

Sämtliche Hall-Sensoren werden mit einer Versorgungsspannung $V_{CC}$ versorgt. Hierzu ist die Sauglanze 12 auf in Fig. 14 nicht dargestellte Weise mit der Dosiereinrichtung 17 gemäß Fig. 1 verbunden, und erhält von dort die Versorgungsspannung. Freilich kann die für die Messelektronik 51 gemäß Fig. 14 erforderliche Versorgungsspannung alternativ auch von einem Zielgerät 24 gemäß Fig. 1 oder von einer gesonderten Spannungsversorgungsquelle bereitgestellt werden.

Ausgangsseitig des jeweiligen Hall-Sensors 71a, 71b, 71c, 71d ist ein Widerstand $R_1$, $R_2$, $R_3$ ... $R_n$ angeordnet. Ausgangsseitig sind die Widerstände ihrerseits mit einer gemeinsamen Sammelleitung verbunden, die über einen Widerstand $R_V$ mit der Versorgungsspannung verbunden sind.

In dem Bereich eines Punktes 107 ist - theoretisch - eine Spannung $U_M$ abgreifbar. Je nach dem, welcher der Hall-Sensoren durchschaltet, besteht ein Spannungsteiler zwischen dem Widerstand $R_V$ und dem jeweils aktuellen durchgeschalteten Widerstand $R_i$ (also einem oder mehreren der Widerstände $R_1$, $R_2$, $R_3$ ... bis $R_n$.

An dem Punkt 107 stellt sich also durch den Spannungsteiler eine entsprechende Spannung ein.

Diese Spannung wird auf ein elektronisches Verstärkerelement 97 geführt, das ausgangsseitig einen Gesamtstrom $I_{RL}$ generiert und über einen Widerstand $R_L$ mit Masse verbunden ist.

Der Verstärker 97 verstärkt also das Spannungssignal $U_M$. Über den Widerstand $R_L$ kann ein Strom eingestellt werden. Dieser ändert sich proportional zur Spannung $U_M$ am Spannungsteiler. Da $R_L << R_V$ wird die Stromänderung nahezu nur durch den Lastwiderstand $R_L$ bestimmt.

Abhängig von dem Füllstand in dem Behältnis und damit abhängig von der axialen Position des Schwimmerkörpers 37 werden unterschiedliche Schalter der Hall-Sensoren angesprochen und geöffnet: Bei dem Ausführungsbeispiel der Fig. 14 ist eine Position des Schwimmerkörpers 37 dargestellt, in der der Magnet 38 den Hall-Sensor 71a durchschaltet oder öffnet, so dass Strom hindurch fließt und zwar ausgehend von der Masseanschluss 106 durch den Hall-Sensor 71a und durch den Widerstand $R_1$ zu dem Anschlusspunkt 107 fließt. In dem Anschlusspunkt 107 spaltet sich der Strom auf zwei Anteile auf: Ein erster verhältnismäßig kleiner Strom fließt durch den Widerstand $R_V$ und ein zweiter, anteilsmäßig größerer Strom fließt durch den Verstärkerbaustein 97.

Der Widerstand $R_V$ ist erheblich größer, als der Widerstand $R_L$ (es gilt also: $R_L \ll R_V$). Der maßgebliche Strom $I_{RL}$ wird auf der Ausgangsseite des Verstärkers 97 verstärkt und ist daher besser messbar.

Des Weiteren gilt, dass $R_V \gg R_1, R_2, R_3 \ldots R_n$.

Wenn sich der Füllstand in dem Behältnis ändert und sich demzufolge auch die Position des Schwimmers 37 ändert, kann ein anderer der Hall-Sensoren 71a, 71b, 71c, 71d durchschalten. Da die Widerstände $R_1$, $R_2$, $R_3$, ... $R_n$ unterschiedlich gewählt sind, kann der ausgangsseitig des Verstärkers 97 generierte Strom 103 als ein Maß oder eine Bestimmungsgröße dafür verwendet werden, welcher der Hall-Sensoren gerade durchgeschaltet ist. Hieraus kann ein Rückschluss auf den aktuellen Füllstand an Medium in dem Behältnis getroffen werden.

Bei der Schaltung des Ausführungsbeispiels der Fig. 14 gilt darüber hinaus:

$$R_1 > R_2 > R_3 > \ldots > R_n.$$

Hierdurch kann eindeutig festgestellt werden, welcher der Hall-Sensoren 71a, 71b, 71c, 71d, 71e, 71f, 71g, 71h, 71i, 71j, 71k, 71l, 71m, 71n gerade durchschaltet und wo sich demzufolge der Schwimmerkörper befindet bzw. welchen Füllstand das Medium in dem Behältnis aktuell einnimmt.

Des Weiteren gilt, dass auch zu berücksichtigen ist, dass in bestimmten Zwischenpositionen des Schwimmerkörpers 37 nicht genau ein Hall-Sensor, sondern gegebenenfalls auch zwei Hall-Sensoren gleichzeitig angesprochen werden können: Sinkt beispielsweise der Füllstand ausgehend von Fig. 14 nur ein wenig, derart, dass der Schwimmerkörper 37 aus der Position gemäß Fig. 14 nur geringfügig absenkt, kann eine Zwischensituation eintreten, in der der Hall-Sensor 71a und der Hall-Sensor 71b gleichzeitig durchschalten. Dann fließen Ströme durch den Widerstand $R_1$ und durch den $R_2$.

Bei der Ausführungsform gemäß Fig. 14 gilt daher vorteilhaft, dass der Gesamtwiderstand, der infolge einer Parallelschaltung durch die beiden Leitungszweige durch die Widerstände $R_1$ und $R_2$ hindurch generiert wird, größer ist als der Widerstand $R_n$.

Hierdurch kann auch in solchen Zwischenpositionen, in denen der Magnet 38 zwei Hall-Sensoren oder Schalter gleichzeitig anspricht, eindeutig die Position des Schwimmerkörpers und damit der Füllstand ermittelt werden.

Die Widerstände $R_1, R_2, R_3 \ldots R_n$ sind der Größe nach angeordnet. Über die Messung der Spannung im Endbereich des Anschlusspunktes 107 kann also der Hall-Sensor bestimmt werden, der gerade durchschaltet.

Angemerkt sei, dass bei dem Betrieb der Sauglanze 12 gemäß Fig. 14 immer alle Hall-Sensoren 71a, 71b, 71c, 71d, 71e, 71f, 71g, 71h, 71i, 71j, 71k, 71l, 71m, 71n mit einer Versorgungsspannung versorgt werden. Die Stromaufnahme durch die Hall-Sensoren ist aber äußerst gering und konstant. Erst wenn Hall-Sensoren eine bestimmte Position des Schwimmerkörpers detektieren und durchschalten, werden gut messbare Ströme $I_{RL}$ generiert.

Der konstante Ruhestrom, der beim Betrieb der Hall-Sensoren immer als Minimum fließt, kann von einer Steuereinheit des Dosiergerätes oder des Zielgerätes beispielsweise auch als Kriterium herangezogen werden, ob überhaupt eine Sauglanze - ordnungsgemäß - angeschlossen ist.

Angemerkt sei, dass das Schaltbild der Fig. 14 nicht vollständig ist, sondern nur zur Erläuterung eines möglichen Ausführungsbeispiels der Erfindung und zur Prinzipdarstellung dient: Tatsächlich sind der Spannungsanschlusspunkt 102, bezogen auf Fig. 14 oberhalb des Widerstandes $R_V$, und der Stromanschlusspunkt 103, vorteilhaft über nicht dargestellte weitere Bauelemente miteinander verbunden.

Die Schaltung der Fig. 14 ermöglicht daher eine Zwei-Draht-Anbindung oder einen Zwei-Leitungsanschluss der Sauglanze 12 an die Dosiereinrichtung oder gegebenenfalls auch an ein Zielgerät.

Mit einer solchen, nur zwei Leiter umfassenden Schaltung, kann die Sauglanze mit einer sehr vorteilhaften und einfachen Konstruktion und Bauweise gefertigt und betrieben werden: Über die in Abhängigkeit von der Schwimmerposition unterschiedlichen Stromaufnahmen in der Messelektronik und deren Messung kann über nur zwei Leiter eine Aussage über den Füllstand des Mediums im Behältnis getroffen werden.

Fig. 15 zeigt einen insgesamt mit dem Bezugszeichen 105 bezeichneten Bestandteil der Messelektronik 51. Dieser Bestandteil 105 ist vorzugsweise an einer Dosiereinrichtung 17, gegebenenfalls auch an einem Zielgerät 23, angeordnet. Der Bestandteil 105 der Messelektronik 51 umfasst einen Shunt Widerstand 99 und einen Operationsverstärker 100. Über den Shunt Widerstand fällt eine entsprechende Spannung ab, die durch einen Operationsverstärker 100 verstärkt werden kann. Diese Spannung wird einer Auswerteeinheit 101 zugeleitet.

Die Auswerteeinheit 101 ist mit der Steuerung 22 der Dosiereinrichtung und/oder mit der Steuerung 26 des Zielgerätes 23 verbunden und kann die entsprechenden Informationen über den Füllstand übermitteln.

Durch den Shunt Widerstand 99 fließt der Strom, der auch durch die Messelektronik 51 fließt. Der Operationsverstärker 100 dient zur Verstärkung dieser Messgröße mit dem Ziel, eine robuste Aussage über den Füllstand zu erhalten.

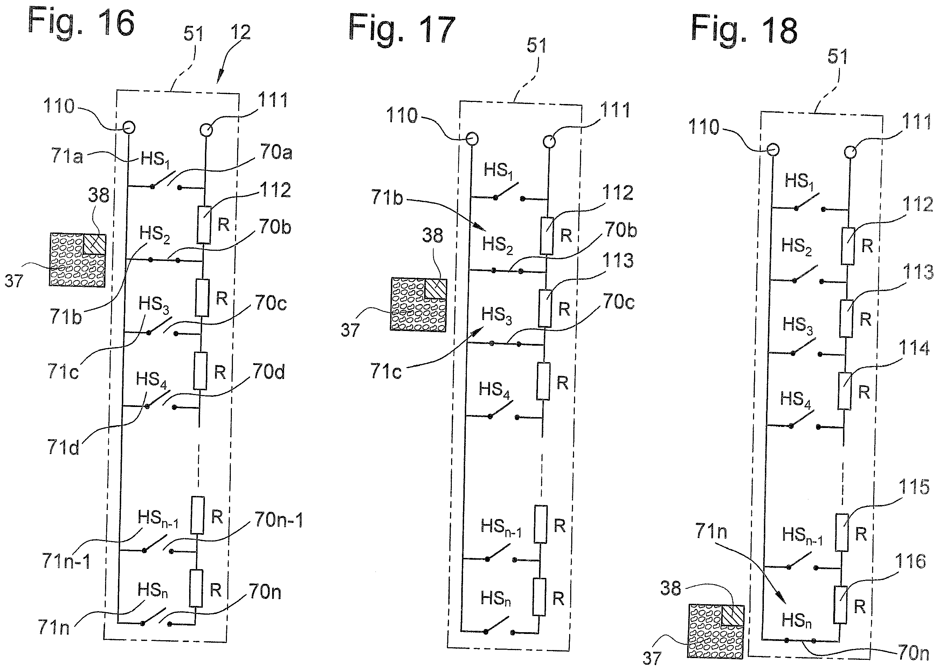

Anhand der Reihenfolge der Figuren 16, 17 und 18 soll ein weiteres Ausführungsbeispiel einer erfindungsgemäßen Sauglanze unter Darlegung einer gegenüber dem Ausführungsbeispiel der Figuren 14 und 15 geänderten Messelektronik 51 erläutert werden:
Das Ausführungsbeispiel der Fig. 16 entspricht in einer schematischen Darstellung etwa dem Ausführungsbeispiel der Fig. 14.

Dabei ist aber bewusst eine andere Darstellung der Hall-Sensoren 71a, 71b, 71c, 71d, 71e, 71f, 71g, 71h, 71i, 71j, 71k, 71l, 71m, 71n und eine geänderte Darstellung der von den Hall-Sensoren betätigten Schalter 70a, 70b, 70c, 70d, 70e, 70f, 70g, 70h, 70i, 70j, 70k, 70l, 70m, 70n vorgenommen worden.

Das Ausführungsbeispiel der Fig. 16 stellt schematisch eine Position des Schwimmerkörpers 37 entsprechend einem ersten Füllstand in dem nicht dargestellten Behältnis dar. Hier schließt der Schwimmerkörper 37 mit seinem Magneten 38 den Schalter 70b, der dem entsprechenden Hall-Sensor 71b zugeordnet ist. Der Strom kann nun zwischen dem ersten Anschluss 110 und dem zweiten Anschluss 111 durch den Widerstand 112 schließen.

Sinkt der Füllstand des Behältnisses - was in den Figuren nicht dargestellt ist - geringfügig, und wird der Schwimmerkörper 37 bezogen auf Fig. 16 nach unten verlagert, hin in eine Position gemäß Fig. 17, kann eine Zwischenstellung erreicht werden, in der der Magnet 38 sowohl den Hall-Sensor 71b anspricht und den zugehörigen Schalter 70b schließt, als auch den Hall-Sensor 71c anspricht und den zugehörigen Schalter 70c schließt. Es fließt nun Strom durch den Hall-Sensor 71c und den oberen Widerstand 112 als auch Strom durch den Hall-Sensor 71c und den unteren Widerstand 113 zwischen dem ersten Anschluss 110 und dem zweiten Anschluss 111.

Angemerkt sei, dass die in den Figuren 16 bis 18 sämtlich mit dem Bezugszeichen R bezeichneten Widerstände, entsprechend der Wahl der Bezugszeichen 111 bis 116 gemäß Fig. 18, unterschiedlich ausgebildet sein können. Des Weiteren sei angemerkt, dass jeweils zwischen einem Hall-Sensor und dem jeweiligen Widerstand R auch noch ein weiterer, nicht dargestellter Widerstand angeordnet sein kann. Die Widerstände werden so gewählt, dass sich der jeweilige Schaltzustand der Messelektronik 51, der in Abhängigkeit von unterschiedlichen Axialpositionen des Schwimmers 37 unterschiedlich ist, detektieren lässt, sei es, weil die Messelektronik zum Beispiel einen unterschiedlichen Widerstandswert aufweist oder sei es, weil die Messelektronik 51 unterschiedliche Stromaufnahmen zeigt, und diese unterschiedlichen Schaltzustände der Messelektronik jedenfalls messbar sind.

Entscheidend ist, dass die Messelektronik eine Größe ausgibt oder abfragbar vorhält oder messbar macht, die eindeutig erkennen lässt, welcher Hall-Sensor aktuell oder welche beiden benachbarten Hall-Sensoren aktuell von dem Schwimmer angesprochen werden.

Nun wird angenommen, dass der Füllstand ausgehend von Fig. 17 weiter sinkt und der Schwimmer 37 auf ein unterstes Niveau fällt. Dann wird eine Position gemäß Fig. 18 erreicht: Hier wird nur der Hall-Sensor 71n von dem Magneten 38 angesprochen und der zugehörige Schalter 70n geschlossen. Zwischen den Anschlüssen 110 und 111 kann jetzt nur ein Strom fließen, der durch sämtliche Widerstände 112, 113, 114, 115 und 116 hindurch fließen muss.

Auch das Ausführungsbeispiel der Figuren 16 bis 18 verdeutlicht, dass infolge unterschiedlicher Füllstände an Medium in dem Behältnis der Schwimmerkörper 37 unterschiedliche Axialpositionen einnimmt, und in Abhängigkeit der Axialposition unterschiedliche Hall-Sensoren anspricht, und das Ansprechen dieser Schalter unterschiedliche Schaltzustände der Messelektronik 51 generiert. Diese unterschiedlichen Schaltzustände der Messelektronik 51 können ausgegeben oder detektiert werden und an eine Steuerung der Dosiereinrichtung oder an eine Steuerung des Zielgerätes eine Information vermitteln, welchen Füllstand das Medium in dem Behältnis aktuell einnimmt.

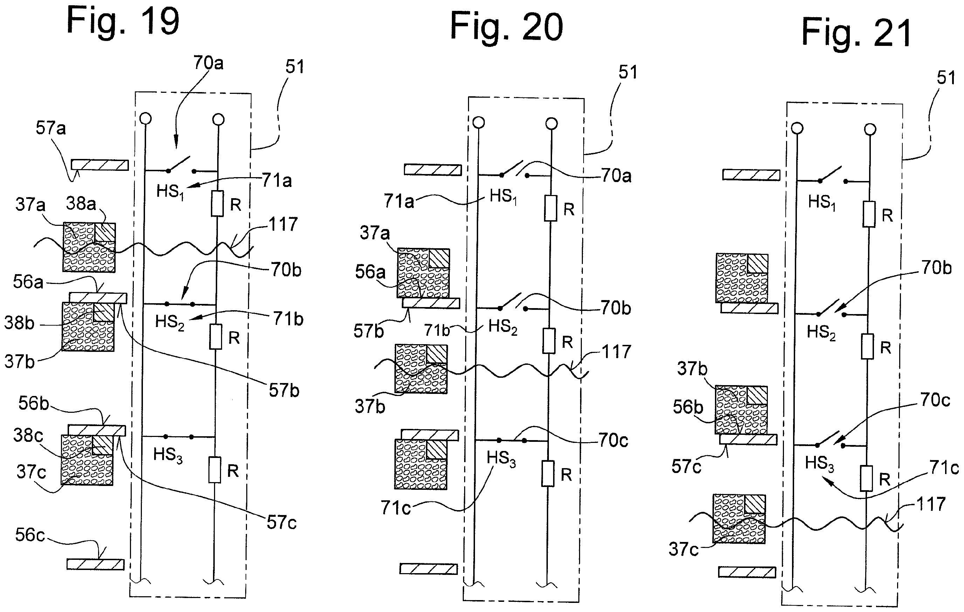

Ein weiteres Ausführungsbeispiel einer erfindungsgemäßen Sauglanze soll nun anhand der Ausführungsbeispiele der Figuren 19 bis 21 erläutert werden: Angemerkt sei, dass auch diese Darstellung lediglich schematisch zu verstehen ist.

Die Figuren 19 bis 21 zeigen in einer Darstellung vergleichbar der Ausführungsbeispiele der Figuren 16 bis 18 schematisch ein weiteres Ausführungsbeispiel einer Sauglanze mit einer gegenüber dem zuvor genannten Ausführungsbeispiel geänderten Messelektronik 51.

Im Unterschied zu dem Ausführungsbeispiel der Figuren 16 bis 18 ist nunmehr nicht nur ein Schwimmer, sondern es sind drei Schwimmer 37a, 37b, 37c vorgesehen. Bei dem Ausführungsbeispiel der Figuren 19 bis 21 sind drei Hall-Sensoren 71a, 71b, 71c und drei, diesen zugeordnete oder auch in die Hall-Sensoren integrierte Schalter 70a, 70b, 70c vorgesehen.

Die Zahl der Schwimmer und die Zahl der Hall-Sensoren ist beliebig wählbar.

Entsprechend der Zahl der Hall-Sensoren 71a, 71b, 71c ist eine entsprechende Zahl an Schwimmerkörpern 37a, 37b, 37c vorgesehen.

Jeder Schwimmerkörper ist zwischen einer oberen Anschlagfläche 57 und einer unteren Anschlagfläche 56 verfahrbar.

Der Schwimmerkörper 37a ist zwischen einer oberen Anschlagfläche 57a und unteren Anschlagfläche 56a gefangen. Der Schwimmerkörper 37b ist zwischen einer oberen Anschlagfläche 57b und einer unteren Anschlagfläche 56b gefangen und der dritte Schwimmerkörper 37c ist zwischen einer oberen Anschlagfläche 57c und einer unteren Anschlagfläche 56c gefangen.

Die Figuren 19 bis 21 zeigen drei unterschiedliche Niveaustände, mit unterschiedlichen angedeuteten Flüssigkeitsniveaus. Der Schwimmerkörper 37a schwimmt jeweils auf der Flüssigkeitsoberfläche 117.

Gemäß Fig. 19 befindet sich das Flüssigkeitsniveau 117 zwischen der oberen Anschlagfläche 57a und der unteren Anschlagfläche 56a. Der Schwimmerkörper 37a wird insoweit auf der Flüssigkeitsoberfläche 117 aufschwimmen und ist gemäß Fig. 19 von der oberen Anschlagfläche 57 beabstandet. Die Beabstandung ist so groß, dass der Magnet 38a des Schwimmerkörpers 37a den Hall-Sensor 71a nicht ansprechen kann. Der dem Hall-Sensor 71a zugeordnete Schalter 70a ist daher geöffnet.

Bei dem Flüssigkeitstand gemäß Fig. 19 sind die Schwimmerkörper 37b und 37c bestrebt, zu der Flüssigkeitsoberfläche 117 zu gelangen. Sie werden hieran aber durch die oberen Anschlagflächen 57b bzw. 57c gehindert. In ihrer jeweiligen oberen Anschlagsposition schalten die Magnetkörper 38b, 38c über die entsprechenden Schalter 70b, 70c den entsprechenden Hall-Sensor 71b, 71c durch. Die Messschaltung 51 nimmt einen ersten Messzustand an.

Wenn ausgehend von dem Flüssigkeitsniveau 117 gemäß Fig. 19 der Flüssigkeitsstand auf ein Niveau gemäß Fig. 20 sinkt, fällt der Schwimmerkörper 37a aus der Position gemäß Fig. 19 etwas herab und legt sich an die untere Anschlagfläche 56a an. In dieser Situation - dies sei an dieser Stelle klargestellt - kann der Magnet 38a des Schwimmerköpers 37a den Schalter 70b nicht ansprechen. Der Schalter 70b bzw. der entsprechende Hall-Sensor 71b kann grundsätzlich nur von dem Magneten 38b des Schwimmerkörpers 37b angesprochen werden, wie dies in Fig. 19 gezeigt ist.

Gemäß Fig. 20 ist der Flüssigkeitsstand derartig gesunken, dass der Schwimmerkörper 37b von seiner zugehörigen oberen Anschlagfläche 57b beabstandet ist. Der Magnet 38b hat sich also von dem Hall-Sensor 71b soweit beabstandet, dass er ihn nicht mehr ansprechen kann. Der Schalter 70b ist daher geöffnet. Es ist deutlich, dass die Messelektronik 51 einen anderen Schaltzustand einnimmt, als gemäß Fig. 19.

Fällt der Flüssigkeitsstand 117 noch weiter, wie in Fig. 21 gezeigt, trifft auch der Schwimmerkörper 37b auf seine unsere Anschlagfläche 56b. Zugleich hebt sich der Schwimmerkörper 37c von der oberen Anschlagsfläche 57c ab und kann den Hall-Sensor 71c nicht mehr ansprechen. Dies führt zu einer Öffnung des Schalters 70c. Bei diesem Flüssigkeitstand gemäß Fig. 21 nimmt die Messelektronik 51 wiederum einen anderen Schaltzustand ein, als gemäß Fig. 19 und Fig. 20.

Die unterschiedlichen Schaltzustände der Messelektronik 51 können detektiert werden. Beispielsweise können unterschiedliche Widerstandwerte oder unterschiedliche Ströme durch die Messelektronik 51 oder - je nachdem wo eine Spannung abgegriffen wird - auch unterschiedliche Spannungen detektiert werden.

Die Ausführungsbeispiele der Figuren 19 bis 21 veranschaulichen, dass von der Erfindung auch Sauglanzen und Systeme umfasst sind, bei denen nicht nur ein Schwimmerkörper, sondern mehrere Schwimmerkörper vorgesehen sind.

Die Schwimmerkörper können dabei den einzelnen Hall-Sensoren - oder den einzelnen Schaltern - unmittelbar zugeordnet sein. Sie können zum Beispiel auch miniaturisiert oder kleinbauend ausgebildet sein, und zum Beispiel auch nur entlang eines sehr geringen Verfahrweges verfahrbar ausgebildet sein.

Angemerkt sei an dieser Stelle, dass eine Verstärkereinheit 97, wie in Fig. 14 dargestellt, vorteilhaft an der Sauglanze angeordnet sein kann. Auch die übrigen Ausführungsbeispiele einer Messelektronik 51 gemäß der Figuren können jeweils eine solche Verstärkereinheit, auch wenn diese zum Teil nicht dargestellt ist, umfassen.

Alternativ kann eine solche Verstärkereinheit 97 auch an der Dosiereinrichtung oder an dem Zielgerät angeordnet sein.

Bei weiteren Ausführungsbeispielen der Erfindung können die beschriebenen Messelektroniken 51 auch Schaltungen verwenden, die ohne eine Verstärkereinheit 97 auskommen.

Sämtliche in den Zeichnungen dargestellten sowie in den Textpassagen angedeuteten Ausführungsbeispiele können alternativ zu den dargestellten Hall-Sensoren auch Reed-Schalter oder andere Sensoren verwenden.

**Patentansprüche**

1. System (10) zur Dosierung von Medien (14), umfassend wenigstens ein Behältnis (13) zur Aufnahme eines Mediums, eine eine Pumpe (18) aufweisende Dosiereinrichtung (17), und ein Zielgefäß (23), wobei das Medium (14) unter Zuhilfenahme einer in das Behältnis (13) einsteckbaren und auf einen Boden des Behältnisses (58) aufsetzbaren Sauglanze (12) durch Betätigung der Pumpe (18) aus dem Behältnis entnehmbar und dem Zielgefäß (23) zuführbar ist, **dadurch gekennzeichnet, dass** die Sauglanze einen Schwimmerkörper (37) aufweist, der entlang der axialen Erstreckung der Sauglanze zwischen einem Fußbereich der Sauglanze (63) und einem Kopfbereich der Sauglanze (62) verfahrbar angeordnet ist, und der in unterschiedlichen Axialpositionen unterschiedliche Schalter (53a, 53b, 53c, 53d) einer Messelektronik (51) betätigt.

2. System nach Anspruch 1, **dadurch gekennzeichnet, dass** die Messelektronik (51) in der Sauglanze (12) angeordnet ist.

3. System nach Anspruch 2, **dadurch gekennzeichnet, dass** sich die Messelektronik (51) entlang der axialen Erstreckung der Sauglanze zwischen einem Fußbereich der Sauglanze (63) und einem Kopfbereich der Sauglanze (62) erstreckt.

4. System nach Anspruch 2 oder 3, **dadurch gekennzeichnet, dass** die Messelektronik (51) innerhalb einer Hohlkammer (33) der Sauglanze (12) angeordnet ist.

5. System nach Anspruch 4, **dadurch gekennzeichnet, dass** die Hohlkammer (33) versiegelt ist.

6. System nach Anspruch 4 oder 5, **dadurch gekennzeichnet, dass** sich die Hohlkammer (33) entlang der axialen Erstreckung der Sauglanze zwischen einem Fußbereich der Sauglanze und einem Kopfbereich der Sauglanze erstreckt.

7. System nach einem der vorangegangenen Ansprüche, **dadurch gekennzeichnet, dass** die Schalter (53a, 53b, 53c, 53d) entlang der axialen Erstreckung der Sauglanze zwischen einem Fußbereich der Sauglanze und einem Kopfbereich der Sauglanze angeordnet sind.

8. System nach einem der vorangegangenen Ansprüche, **dadurch gekennzeichnet, dass** der Schwimmerkörper (37) in jeder Axialposition wenigstens einen der Mehrzahl der Schalter (53) anspricht.

9. System nach einem der vorangegangenen Ansprüche, **dadurch gekennzeichnet, dass** die Messelektronik (51) mit einer Steuerung (22) der Dosiereinrichtung (17) verbindbar ist.

10. System nach einem der vorangegangenen Ansprüche, **dadurch gekennzeichnet, dass** mittels der Steuerung (22) die unterschiedlichen Axialpositionen des Schwimmerkörpers (37) feststellbar oder Informationen über die unterschiedlichen Axialpositionen des Schwimmerkörpers (37) weiterverarbeitbar sind.

11. Sauglanze (12) zur Entnahme eines flüssigen Mediums (14) aus einem Behältnis (13), umfassend einen Sauglanzenfußbereich (63) zum Aufsetzen auf einen Boden des Behältnisses (58) und einen Sauglanzenkopfbereich (62) zur Verbindung mit einer Dosiereinrichtung (17), **dadurch gekennzeichnet, dass** die Sauglanze (12) einen Schwimmerkörper (37) aufweist, der entlang der axialen Erstreckung der Sauglanze zwischen dem Fußbereich (63) der Sauglanze und dem Kopfbereich (62) der Sauglanze (12) verfahrbar angeordnet ist, und der in unterschiedlichen Axialpositionen unterschiedliche Schalter (53a, 53b, 53c, 53d) einer Messelektronik (51) betätigt.

12. Sauglanze nach dem Oberbegriff des Anspruches 11, **dadurch gekennzeichnet, dass** sie wenigstens eine Saugleitung (12) aufweist, in der eine Ventilkugel (39) angeordnet ist.

13. Sauglanze nach dem Oberbegriff des Anspruches 11, **dadurch gekennzeichnet, dass** die Sauglanze (12) einen Schwimmerkörper (37) aufweist, der zwischen zumindest zwei unterschiedlichen, von einer Messelektronik detektierbaren Positionen verfahrbar ist, und dass die Sauglanze (12) einen insbesondere von einem Außenrohr (30) bereitgestellten Wandungsbereich umfasst, der den Schwimmerkörper (37) in beiden Position außenseitig überdeckt.

14. Sauglanze (12) zur Entnahme eines flüssigen Mediums (14) aus einem Behältnis (13), umfassend einen Sauglanzenfußbereich (63) und einen Sauglanzenkopfbereich (62), **dadurch gekennzeichnet, dass** die Sauglanze (12) einen Schwimmerkörper (37) aufweist, der entlang eines Bereiches einer axialen Erstreckung der Sauglanze zwischen Sauglanzenfußbereich (63) und Sauglanzenkopfbereich (62) verfahrbar angeordnet ist, und mit dem in zumindest zwei unterschiedlichen Axialpositionen zwei unterschiedliche Schalter (83, 84) einer Messelektronik (51, 91) betätigbar sind.

15. Sauglanze (12) zur Entnahme eines flüssigen Mediums (14) aus einem Behältnis, umfassend einen Sauglanzenfußbereich (63) zum Aufsetzen auf einen Boden des Behältnisses (58) und einen Sauglanzenkopfbereich (62), insbesondere zur Verbindung mit einer Dosiereinrichtung, **dadurch gekennzeichnet, dass** entlang der axialen Erstreckung der Sauglanze zwischen dem Fußbereich (63) und dem Kopfbereich (62) der Sauglanze mehrere unterschiedliche Schalter (53a, 53b, 53c, 53d) einer Messelektronik (51) angeordnet sind, die von einem Schwimmerkörper (37) oder von mehreren unterschiedlichen Schwimmerkörpern (37a, 37b, 37c, Fig. 19), in Abhängigkeit von dem Füllstand in dem Behältnis, betätigbar sind.

Fig. 1

Fig. 2

Fig. 3

Fig. 4a

Fig. 4b

# Fig. 5

# Fig. 6

# Fig. 7

Fig. 8

# Fig. 9

# Fig. 10

# Fig. 11

# Fig. 12

EP 3 742 133 A1

# Fig. 13

30

## Fig. 14

## Fig. 15

Fig. 16

Fig. 17

Fig. 18

EP 3 742 133 A1

Fig. 19

Fig. 20

Fig. 21

EP 3 742 133 A1

Europäisches
Patentamt

European
Patent Office

Office européen
des brevets

# EUROPÄISCHER RECHERCHENBERICHT

Nummer der Anmeldung

EP 20 17 5359

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP H05 72550 U (UNKNOWN) 5. Oktober 1993 (1993-10-05) * Absätze [0004], [0006], [0007], [0008], [0010], [0011], [0015], [0020], [0021], [0029], [0034]; Abbildungen 3, 6, 7 * | 1-15 | INV. G01F23/68 G01F23/64 |
| A | US 2002/136644 A1 (HERRMANN MICHAEL [DE] ET AL) 26. September 2002 (2002-09-26) * Abbildung 3a * | 12 | |
| A | JP 2013 002965 A (DENSO CORP) 7. Januar 2013 (2013-01-07) * Absätze [0027], [0030], [0040]; Abbildung 1 * | 1-15 | |
| A | JP S56 120919 A (TAKAHASHI TAKAO) 22. September 1981 (1981-09-22) * Absatz [0003]; Abbildung 1 * | 1-15 | |
| A | EP 2 241 241 A1 (WEIGERT CHEM FAB [DE]) 20. Oktober 2010 (2010-10-20) * Abbildung 1 * ----- | 12 | RECHERCHIERTE SACHGEBIETE (IPC) B67D G01F A47L D06F F04B |

Der vorliegende Recherchenbericht wurde für alle Patentansprüche erstellt

| Recherchenort | Abschlußdatum der Recherche | Prüfer |
|---|---|---|
| Den Haag | 23. September 2020 | Decaix, François |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 17 5359

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-09-2020

| Im Recherchenbericht angeführtes Patentdokument | Datum der Veröffentlichung | Mitglied(er) der Patentfamilie | Datum der Veröffentlichung |
|---|---|---|---|
| JP H0572550 U | 05-10-1993 | JP 2539651 Y2 JP H0572550 U | 25-06-1997 05-10-1993 |
| US 2002136644 A1 | 26-09-2002 | DE 10103014 A1 US 2002136644 A1 | 25-07-2002 26-09-2002 |
| JP 2013002965 A | 07-01-2013 | JP 5510396 B2 JP 2013002965 A | 04-06-2014 07-01-2013 |
| JP S56120919 A | 22-09-1981 | KEINE | |
| EP 2241241 A1 | 20-10-2010 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011108396 A1
- DE 102011119021 A1
- DE 102011122921 A1
- DE 502012012612 A1
- DE 102012012694 A1
- DE 102012012913 A1
- DE 502013010339 A1
- DE 102014002560 A1
- DE 102014010126 A1
- DE 502015007053 A1
- DE 102015110862 A1
- DE 102015107105 A1
- DE 502016003374 A1
- DE 102015170976 A1
- DE 102016102829 A1
- DE 102017107214 A1
- DE 102017114767 A1
- DE 102016121383 A1
- DE 102017103168 A1
- DE 102016125928 A1
- DE 102017114665 A1
- DE 102018113644 A1
- DE 102018117669 A1
- DE 102018122651 A1
- DE 102019109793 A1
- DE 102018110155 A1
- DE 102018106045 A1